# FASCICULE DE BREVET EUROPEEN

(11) **EP 3 652 953 B1**
(45) Date de publication et mention de la délivrance du brevet: **13.04.2022**
(21) Numéro de dépôt: 18732387.8
(22) Date de dépôt: 27.06.2018
(51) Int. Cl.: H04N 21/2668, H04N 21/433

(54) **PROCÉDÉ DE SIGNALISATION D'UNE SUBSTITUTION À UN TERMINAL, PROCÉDÉ DE SUBSTITUTION PAR UN TERMINAL, PRODUITS PROGRAMME D'ORDINATEUR, SYSTÈME ET TERMINAL CORRESPONDANTS**
VERFAHREN ZUR SIGNALISIERUNG EINES ERSATZES AN EIN ENDGERÄT, VERFAHREN ZUM ERSETZEN DURCH EIN ENDGERÄT, ENTSPRECHENDE COMPUTERPROGRAMMPRODUKTE, SYSTEM UND ENDGERÄT
METHOD FOR SIGNALLING A SUBSTITUTION TO A TERMINAL, METHOD FOR SUBSTITUTION BY A TERMINAL, CORRESPONDING COMPUTER PROGRAM PRODUCTS, SYSTEM AND TERMINAL

(30) Priorité: 12.07.2017 FR 1756595
(43) Date de publication de la demande: 20.05.2020
(73) Titulaire: TDF, 92120 Montrouge (FR)
(72) Inventeur: VINCENT, David, 35150 Amanlis (FR)
(74) Mandataire: Vidon Brevets & Stratégie
(86) Numéro de dépôt international: PCT/EP2018/067266
(87) Numéro de publication internationale: WO 2019/011655

(56) Documents cités:
- WO-A1-2014/004955
- WO-A1-2016/098059
- US-A1- 2011 145 857
- US-A1- 2017 048 565

## Description

### 1 DOMAINE TECHNIQUE

Le domaine de l'invention est celui de la substitution de contenu au sein d'un flux diffusé (c'est-à-dire le remplacement d'un contenu par un autre). On parle également d'insertion de contenu, ou encore de décrochage.

Plus précisément l'invention concerne un procédé de signalisation, à un terminal, de la substitution d'un contenu diffusé via un réseau de diffusion auquel est connecté le terminal par un contenu ciblé pour le terminal en question, ainsi qu'un procédé de substitution correspondant mis en œuvre dans le terminal.

L'invention a de nombreuses applications, notamment, mais non exclusivement, dans le domaine de la publicité ciblée, la méthode décrite permettant une restitution d'une publicité personnalisée (ciblée) au niveau d'un terminal en lieu et place d'une publicité diffusée par un réseau de diffusion.

### 2 ARRIERE-PLAN TECHNOLOGIQUE

Il existe aujourd'hui des protocoles permettant d'insérer des ordres de décrochage dans un flux de données véhiculant un contenu diffusé au sein d'un réseau de diffusion.

Par exemple, le protocole SCTE (pour « Society of Cable Telecommunications Engineers » en anglais) 104 permet de transmettre de tels ordres, classiquement entre un studio d'enregistrement de la chaine de diffusion et un codeur embarqué dans la tête de réseau. Plus particulièrement, les ordres en question sont soit insérés dans le flux SDI (pour « Serial Digital Interface » en anglais) produit en sortie du studio d'enregistrement, soit véhiculés en parallèle du flux SDI via par exemple une connexion IP (pour « Internet Protocol » en anglais).

Les ordres au format SCTE 104 sont classiquement reçus par le codeur qui les traduit au format SCTE 35 (autre protocole) et les insère dans son flux MPEG-TS (pour « Moving Picture Experts Group - Transport Stream » en anglais) de sortie, à destination d'un multiplexeur également embarqué dans la tête de réseau.

Le multiplexeur réalise ainsi des décrochages entre un programme national et un programme local sur la base de tels ordres reçus afin de générer un flux de données multiplexé correspondant.

Des solutions de signalisation à un terminal de la substitution de contenus diffusés par des publicités ciblées ont été développées sur la base de tels protocoles. A titre d'exemple la solution de l'opérateur britannique SKY est basée sur l'usage du protocole SCTE 35.

Cependant, les protocoles (standards) SCTE 35 ou 104 ne sont pas normalisés pour les terminaux destinés à restituer les contenus ciblés en question et ne sont donc pas implémentés par défaut sur ces derniers. De telles solutions de signalisation à un terminal nécessitent ainsi l'usage d'un récepteur propriétaire au niveau du terminal afin de pouvoir interpréter les ordres reçus selon un de ces protocoles SCTE 35 et 104.

Le document US 2011/145857 décrit un dispositif client capable d'insérer une publicité dans un flux vidéo diffusé en direct. Ce dispositif client comprend un moteur de correspondance configuré pour recevoir le flux vidéo et pour insérer dans le flux en question une publicité en fonction d'un marqueur intra-bande inclus dans le flux vidéo. Ce marqueur se limite à véhiculer les informations qui permettent au dispositif client d'identifier de manière indirecte l'endroit où substituer le contenu.

Le document US 2017/048565 décrit un procédé d'insertion d'une publicité dans un contenu diffusé qui est lu ensuite sur un périphérique client. Un premier indicateur indique un point de départ et éventuellement la durée d'une première période publicitaire. Dès lors, la réception du contenu diffusé est mise en pause et une ou plusieurs premières annonces de remplacement sont diffusées au lieu d'une ou plusieurs premières annonces originales. Un second indicateur indique la présence d'une deuxième période publicitaire.

Le document WO 2016/098059 décrit un procédé permettant de signaler des informations temporelles et des d'annonces personnalisées à un terminal hybride via un réseau de diffusion. La signalisation consiste à inserer des tables dites ART particulières (se substituant aux tables DVB SI classiquement utilisées) à l'endroit où des marqueurs du type SCTE-35 sont initialement présents dans le flux, de telles tables ART contenant des informations nécessaires au terminal pour effectuer la substitution. »

Il existe donc un besoin pour une méthode de signalisation d'une substitution de contenus à un terminal grand public tel que l'on peut en trouver dans le commerce afin de minimiser le coût de la solution ainsi que d'en faciliter le déploiement.

Une telle méthode doit par ailleurs permette la substitution de contenu d'une manière souple afin de préserver l'expérience utilisateur, par exemple en réduisant les discontinuités dans le rendu à l'utilisateur pouvant résulter du basculement entre le contenu diffusé et le contenu de substitution ciblé pour le terminal en question.

### 3 RESUME

Dans un mode de réalisation de l'invention, il est proposé un procédé de signalisation, à un terminal, de la substitution d'un contenu diffusé via un réseau de diffusion auquel est connecté le terminal par un contenu de substitution ciblé au moins pour le terminal. Un tel procédé comprend :
- une obtention d'au moins un paquet d'informations de substitution comprenant une information temporelle indicative d'un instant d'exécution par le terminal d'au moins une action pour la substitution du contenu diffusé par le contenu de substitution ;
- une génération d'au moins un message de notification d'événement induisant par ledit terminal une exécution de ladite au moins une action, ladite exécution étant
déclenchée par une réception dudit au moins un message de notification d'événement par ledit terminal et effectuée sans connaissance de ladite information temporelle ; et
- une insertion, dans un flux de données véhiculant le contenu diffusé au sein du réseau de diffusion, du au moins un message de notification d'événement à un emplacement temporel fonction de l'information temporelle.

Ainsi, l'invention propose une solution nouvelle et inventive pour permettre la signalisation à un terminal, via un réseau de diffusion, de la substitution d'un contenu diffusé par un contenu ciblé (e.g. une publicité ciblée pour un utilisateur du terminal en question).

Pour ce faire, la méthode revendiquée propose de signaler au terminal qu'il doit effectuer des actions permettant la substitution en question (e.g. démarrer le décodage du contenu ciblé, restituer le contenu ciblé décodé, etc.) via l'envoi de messages de notifications d'événements ne contenant aucune information temporelle concernant la date (en référence au contenu diffusé) à laquelle la substitution en question doit avoir lieu.

Plus particulièrement, une action pour la substitution est exécutée par le terminal sans connaissance d'une information temporelle indicative d'un instant d'exécution, par le terminal, de l'action en question. En d'autres termes, le terminal exécute l'action en question immédiatement à réception du message de notification d'événement, i.e. après une latence d'exécution uniquement liée à des contraintes d'implémentations matérielle dans le terminal, l'exécution étant déclenchée par la réception du message de notification d'événement correspondant par le terminal.

Ainsi, seul l'instant d'insertion des messages de notifications d'événements dans le flux de données permet de contrôler les instants d'exécution des actions en question.

Ainsi, la signalisation de la substitution peut s'appuyer sur des standards existants bien que non dédiés à la signalisation d'événements dits « temps réels », i.e. dont les messages de notifications ne contiennent pas de référence temporelle permettant une exécution synchrone par rapport au flux de données diffusé (e.g. des messages « streamevent » au format DSM-CC (pour « Digital Storage Media Command and Control » en anglais)).

Dans un mode de réalisation, l'au moins un paquet d'informations de substitution comprend au moins une information d'identification, l'au moins une action étant fonction de l'au moins une information d'identification. La génération comprend une encapsulation de l'au moins une information d'identification dans l'au moins un message de notification d'événement.

Ainsi, une action particulière à exécuter (e.g. démarrer le décodage du contenu ciblé, restituer le contenu ciblé décodé, etc.) est signalée de manière simple et directe au terminal.

Dans un mode de réalisation, l'au moins un paquet d'informations de substitution comprend une unique information d'identification pouvant prendre plusieurs valeurs associées chacune, dans le terminal, à un jeu distinct d'au moins une action. La génération comprend une encapsulation de l'unique information d'identification dans l'au moins un message de notification d'événement.

Ainsi, un événement particulier (e.g. le début du contenu diffusé à substituer, la fin du contenu diffusé à substituer, etc.) est signalé au terminal via l'information d'identification. En d'autres termes, dans ce mode de réalisation les messages de notifications d'événements balisent le flux de données véhiculant le contenu diffusé.

Le terminal déduit ainsi de l'événement qui lui est notifié une ou plusieurs actions à réaliser pour la substitution du contenu diffusé. Dans une variante, la ou les actions à réaliser sont obtenues dans le terminal via un algorithme prenant en compte l'évènement en question mais également les événements qui ont été signifiés au terminal antérieurement à l'évènement en question.

Dans un mode de réalisation, l'au moins un paquet d'informations de substitution comprend en outre :
- une première information permettant d'identifier une composante de flux élémentaire du flux de données ;
- une deuxième information permettant d'identifier un flux d'événements dans la composante de flux élémentaire, l'au moins un message de notification d'événement étant compris dans le flux d'événements ; et
- une information de filtrage ;
les première et deuxième informations et l'information de filtrage étant transmises au moins au terminal. L'insertion est fonction de la première information et l'étape de génération comprend une encapsulation de l'information de filtrage et de la deuxième information dans l'au moins un message de notification d'événement.

Ainsi, un message de notification d'événement peut être associé à un terminal particulier, permettant par là-même un meilleur ciblage des contenus de substitution.

Par ailleurs, lorsqu'une pluralité de terminaux reçoit le flux de données véhiculant le contenu diffusé, l'utilisation des mêmes première et deuxième informations ainsi que de la même information de filtrage pour plusieurs terminaux parmi la pluralité de terminaux permet de signaler la substitution du même contenu diffusé aux plusieurs terminaux en question.

Dans un mode de réalisation, le procédé de signalisation comprend en outre :
- une autre insertion, dans le flux de données, d'au moins une image permettant d'initier un décodage, par le terminal, du flux de données,
un écart temporel, dans le flux de données, entre l'au moins une image et l'au moins un message de notification d'événement étant supérieur à une latence d'exécution de l'action identifiée après réception de l'au moins un message de notification d'événement.

Ainsi, à la fin de la substitution, le décodage par le terminal du contenu diffusé reprend dès la réception de l'image en question (e.g. une image à codage interne du type intra ou image I placée au début d'un GOP (pour « Group Of Picture »), minimisant par là-même l'attente avant le début de la reprise du décodage du contenu diffusé, et donc la durée de restitution des éléments d'attente ainsi que le risque d'une absence de restitution à l'utilisateur (e.g. un écran noir) à la fin de la restitution d'un tel élément d'attente.

Dans un mode de réalisation, l'au moins un paquet d'informations de substitution comprend également :
- des informations d'insertion indiquant si l'autre insertion doit être effectuée ; et
- une autre information temporelle indiquant un emplacement temporel d'insertion de l'au moins une image dans le flux de données lorsque les informations d'insertion indiquent que l'autre insertion doit être effectuée.

Ainsi, le dispositif gérant la substitution reste maître de l'insertion (ainsi que de l'instant de l'insertion le cas échéant) d'une telle image afin d'optimiser les transitions entre les restitutions du contenu diffusé et du contenu ciblé pour un terminal donné.

Dans différents modes de réalisation, l'au moins un paquet d'informations de substitution suit un protocole SCTE, pour « Society of Cable Telecommunications Engineers » en anglais, 35 ou 104.

Ainsi, l'information temporelle servant à l'insertion des messages de notification d'événement est aisément transmise au dispositif mettant en œuvre le procédé de signalisation via un protocole standardisé définissant un champ de référence temporelle permettant de synchroniser des événements (ici par exemple les messages de notification d'événements) avec une horloge du flux de données véhiculant le contenu diffusé au sein du réseau de diffusion.

Dans un mode de réalisation, l'étape d'insertion est mise en œuvre au moins deux fois de sorte que :
- un premier message de notification d'événement est inséré à un premier instant dans le flux de données véhiculant ledit contenu diffusé au sein du réseau de diffusion, le premier instant correspondant sensiblement à un début d'une première inter-séquence précédant le contenu diffusé à substituer, le premier message de notification d'événement induisant au moins une restitution d'un premier élément d'attente par le terminal, la restitution du premier élément d'attente étant déclenchée par une réception du premier message de notification d'événement par le terminal et effectuée sans connaissance d'une première information temporelle indicative d'un instant d'exécution par le terminal de la restitution du premier élément d'attente ; et
- un deuxième message de notification d'événement est inséré à un deuxième instant dans le flux de données véhiculant le contenu diffusé au sein du réseau de diffusion, le deuxième instant correspondant sensiblement à un début du contenu diffusé à substituer, le deuxième message de notification d'événement induisant au moins un masquage du premier élément d'attente par le terminal, le masquage du premier élément d'attente étant déclenché par une réception du deuxième message de notification d'événement par le terminal et effectué sans connaissance d'une deuxième information temporelle indicative d'un instant d'exécution par le terminal du masquage du premier élément d'attente.

Ainsi un élément d'attente est restitué pendant la transition entre la fin de la restitution du contenu diffusé et le début de la restitution du contenu de substitution ciblé, évitant par là-même une absence de restitution à l'utilisateur (e.g. un écran noir) pendant la transition en question (e.g. pendant que le décodeur initie un nouveau décodage).

Dans un mode de réalisation, l'étape d'insertion est mise en œuvre au moins deux fois de sorte que :
- un troisième message de notification d'événement est inséré à un troisième instant dans le flux de données véhiculant le contenu diffusé au sein du réseau de diffusion, le troisième instant correspondant sensiblement à un début d'une deuxième inter-séquence suivant le contenu diffusé à substituer, le troisième message de notification d'événement induisant au moins une restitution d'un deuxième élément d'attente par le terminal, la restitution du deuxième élément d'attente étant déclenchée par une réception du troisième message de notification d'événement par le terminal et effectuée sans connaissance d'une troisième information temporelle indicative d'un instant d'exécution par le terminal de la restitution du deuxième élément d'attente ; et
- un quatrième message de notification d'événement est inséré à un quatrième instant dans le flux de données véhiculant le contenu diffusé au sein du réseau de diffusion, le quatrième instant correspondant sensiblement à un début d'un autre contenu diffusé suivant la deuxième inter-séquence, le quatrième message de notification d'événement induisant au moins un masquage du deuxième élément d'attente par le terminal, le masquage du deuxième élément d'attente étant déclenché par une réception du quatrième message de notification d'événement par le terminal et effectué sans connaissance d'une quatrième information temporelle indicative d'un instant d'exécution par le terminal du masquage du deuxième élément d'attente.

Ainsi un élément d'attente est restitué pendant la transition entre la fin de la restitution du contenu de substitution ciblé et la reprise de la restitution du contenu diffusé, évitant par là-même une absence de restitution à l'utilisateur (e.g. un écran noir) pendant la transition en question (e.g. pendant que le décodeur initie un nouveau décodage).

Dans un mode de réalisation, au moins une autre image permettant d'initier un décodage, par le terminal, dudit autre contenu diffusé est insérée dans le flux de données. Le troisième message de notification d'événement déclenche en outre une action induisant un décodage dudit autre contenu diffusé. Un écart temporel, dans le flux de données, entre ladite au moins une autre image et le troisième message de notification d'événement est supérieur à une latence d'exécution de l'action induisant le décodage dudit autre contenu diffusé par ledit terminal.

Ainsi, le décodage par le terminal de l'autre contenu diffusé reprend dès la réception de l'image en question (e.g. une image à codage interne du type intra ou image I placée au début d'un GOP (pour « Group Of Picture »), minimisant par là-même l'attente avant le début de la reprise du décodage du contenu diffusé.

Dans un autre mode de réalisation de l'invention, il est proposé un procédé de substitution, par un terminal, d'un contenu diffusé via un réseau de diffusion auquel est connecté le terminal par un contenu de substitution ciblé au moins pour le terminal. Selon un tel procédé le terminal effectue :
- une réception d'au moins un message de notification d'événement inséré dans un flux de données véhiculant le contenu diffusé au sein du réseau de diffusion ; et
- une exécution d'au moins une action pour la substitution du contenu diffusé par le contenu de substitution, l'exécution étant déclenchée par la réception dudit au moins un message de notification d'événement par le terminal et effectuée sans connaissance d'une information temporelle indicative d'un instant d'exécution par le terminal de ladite au moins une action.

Ainsi, l'action en question est exécutée par le terminal sans connaissance d'une information temporelle indicative d'un instant d'exécution, par le terminal, de l'action en question. En d'autres termes, le terminal exécute l'action en question immédiatement à réception du message de notification d'événement, i.e. après une latence d'exécution uniquement liée à des contraintes d'implémentations matérielle dans le terminal, l'exécution étant déclenchée par la réception du message de notification d'événement correspondant par le terminal.

De la sorte, la substitution est maîtrisée (notamment en termes de délais d'exécution) quand bien même le terminal ne supporte que des messages de notification d'événements ne contenant aucune information temporelle concernant la date (en référence au contenu diffusé) à laquelle la substitution doit avoir lieu.

Ainsi, la signalisation en question peut s'appuyer sur des standards existants bien que non dédiés à la signalisation d'événements dits « temps réels » i.e. dont les messages de notification ne contiennent pas de référence temporelle permettant une exécution synchrone par rapport au flux de données diffusé (e.g. tels que supportés par des terminaux hybrides du type HbbTV (pour « Hybrid Broadcast Broadband TV » en anglais)).

Dans un mode de réalisation, l'exécution comprend une obtention d'au moins une information d'identification encapsulée dans l'au moins un message de notification d'événement. L'au moins une action est fonction de l'au moins une information d'identification obtenue.

Ainsi, une action particulière à exécuter (e.g. démarrer le décodage du contenu ciblé, restituer le contenu ciblé décodé, etc.) est signalée de manière simple et directe au terminal.

Dans un mode de réalisation, l'exécution comprend une obtention d'une unique information d'identification pouvant prendre plusieurs valeurs associées chacune, dans le terminal, à un jeu distinct d'au moins une action. L'au moins une action est fonction de l'unique information d'identification obtenue.

Ainsi, un événement particulier (e.g. le début du contenu diffusé à substituer, la fin du contenu diffusé à substituer, etc.) est signalé au terminal via l'information d'identification. En d'autres termes, dans ce mode de réalisation les messages de notifications d'événements balisent le flux de données véhiculant le contenu diffusé.

Le terminal déduit ainsi de l'événement qui lui est notifié une ou plusieurs actions à réaliser pour la substitution du contenu diffusé.

Dans un mode de réalisation, la ou les actions à réaliser sont obtenues dans le terminal via un algorithme prenant en compte l'évènement en question mais également les événements qui ont été signifiés au terminal antérieurement à l'évènement en question.

Dans un mode de réalisation, le terminal effectue en outre une autre réception, via un réseau large bande auquel est connecté le terminal, de :
- une première information permettant d'identifier une composante de flux élémentaire du flux de données ;
- une deuxième information permettant d'identifier un flux d'événements dans la composante de flux élémentaire, l'au moins un message de notification d'événement étant inséré dans le flux d'événements ; et
- une information de filtrage, l'au moins un message de notification d'événement encapsulant en outre l'information de filtrage ;
la réception de l'au moins un message de notification d'événement étant fonction des première et deuxième informations, pour identifier un flux d'événements dans la composante de flux élémentaire, et de l'information de filtrage, pour identifier l'au moins un message de notification d'événement au sein du flux d'événements identifié.

Ainsi, différents terminaux connectés au réseau de diffusion peuvent être adressés de manière différentiée afin de permettre un meilleur ciblage des contenus de substitution.

Par ailleurs, lorsqu'une pluralité de terminaux reçoit le contenu diffusé, l'utilisation des mêmes première et deuxième informations ainsi que de la même information de filtrage pour plusieurs terminaux parmi la pluralité de terminaux permet de signaler la substitution du même contenu diffusé aux plusieurs terminaux en question.

Dans un mode de réalisation, le terminal effectue en outre une réception du contenu ciblé via le réseau de diffusion ou via le réseau large bande auquel est connecté le terminal.

Ainsi, le terminal peut recevoir les contenus ciblés en question soit via le réseau de diffusion (e.g. via un carrousel de contenus tel que défini par le standard HbbTV), permettant l'obtention du contenu ciblé même en l'absence d'une autre connexion réseau, soit auprès d'un serveur de contenus via un réseau large bande (e.g. Internet), permettant de minimiser la charge du réseau de diffusion.

Par ailleurs, lorsque plusieurs terminaux se voient signaler la substitution d'un même contenu diffusé via la réception des mêmes messages de notification d'événement la substitution reste ciblée pour chaque terminal via la réception préalable de contenus ciblés pour chaque terminal.

Dans un mode de réalisation, l'étape d'exécution est mise en œuvre au moins deux fois de sorte que :
- une restitution d'un premier élément d'attente est exécutée par le terminal, la restitution du premier élément d'attente étant déclenchée par une réception d'un premier message de notification d'événement par le terminal et effectuée sans connaissance d'une première information temporelle indicative d'un instant d'exécution par le terminal de la restitution du premier élément d'attente, le premier message de notification d'événement étant inséré à un premier instant dans le flux de données véhiculant le contenu diffusé au sein du réseau de diffusion, le premier instant correspondant sensiblement à un début d'une première inter-séquence précédant le contenu diffusé à substituer ; et
- un masquage du premier élément d'attente est exécuté par le terminal, le masquage du premier élément d'attente étant déclenché par une réception d'un deuxième message de notification d'événement par le terminal et effectuée sans connaissance d'une deuxième information temporelle indicative d'un instant d'exécution par le terminal du masquage du premier élément d'attente, le deuxième message de notification d'événement étant inséré à un deuxième instant dans le flux de données véhiculant le contenu diffusé au sein du réseau de diffusion, le deuxième instant correspondant sensiblement à un début du contenu diffusé à substituer.

Ainsi un élément d'attente est restitué pendant la transition entre la fin de la restitution du contenu diffusé et le début de la restitution du contenu de substitution ciblé, évitant par là-même une absence de restitution à l'utilisateur (e.g. un écran noir) pendant la transition en question (e.g. pendant que le décodeur initie un nouveau décodage).

Dans un mode de réalisation, le premier message de notification d'événement déclenche en outre une action induisant un décodage du contenu de substitution par un décodeur du terminal, le décodeur générant un premier événement lorsque le contenu de substitution est disponible pour restitution. Lorsque le premier événement est généré avant réception du deuxième message de notification d'événement par le terminal, le terminal exécute le masquage du premier élément d'attente et restitue le contenu de substitution dès que le décodeur a généré le premier événement.

Ainsi, la restitution du premier élément d'attente est de plus courte durée que dans le cas où le masquage du premier élément d'attente et la restitution le contenu de substitution sont déclenchés par la réception du deuxième message de notification d'événement, maximisant par là-même le temps disponible pour la restitution le contenu de substitution.

Dans un mode de réalisation, l'étape d'exécution est mise en œuvre au moins deux autres fois de sorte que :
- une restitution d'un deuxième élément d'attente est exécutée par le terminal, la restitution du deuxième élément d'attente étant déclenchée par une réception d'un troisième message de notification d'événement par le terminal et effectuée sans connaissance d'une troisième information temporelle indicative d'un instant d'exécution par le terminal de la restitution du deuxième élément d'attente, le troisième message de notification d'événement étant inséré à un troisième instant dans le flux de données véhiculant le contenu diffusé au sein du réseau de diffusion, le troisième instant correspondant sensiblement à un début d'une deuxième inter-séquence suivant le contenu diffusé à substituer ; et
- un masquage du deuxième élément d'attente est exécuté par le terminal, le masquage du deuxième élément d'attente étant déclenché par une réception d'un quatrième message de notification d'événement par le terminal et effectuée sans connaissance d'une quatrième information temporelle indicative d'un instant d'exécution par le terminal du masquage du deuxième élément d'attente, le quatrième message de notification d'événement étant inséré à un quatrième instant dans le flux de données véhiculant le contenu diffusé au sein du réseau de diffusion, le quatrième instant correspondant sensiblement à un début d'un autre contenu diffusé suivant la deuxième inter-séquence.

Ainsi un élément d'attente est restitué pendant la transition entre la fin de la restitution du contenu de substitution ciblé et la reprise de la restitution du contenu diffusé, évitant par là-même une absence de restitution à l'utilisateur (e.g. un écran noir) pendant la transition en question (e.g. pendant que le décodeur initie un nouveau décodage).

Dans un mode de réalisation, le décodeur génère un deuxième événement lorsque le décodage du contenu de substitution est terminé. Lorsque le deuxième événement est généré avant réception du troisième message de notification d'événement par le terminal, le terminal exécute la restitution du deuxième élément d'attente dès que le décodeur a généré le deuxième événement.

Ainsi, la restitution du deuxième élément d'attente est de plus longue durée que dans le cas où la restitution du deuxième élément d'attente est déclenchée par la réception du troisième message de notification d'événement. De la sorte, le risque d'empiéter sur le début de l'autre contenu diffusé suivant la deuxième inter-séquence est minimisé. Par ailleurs, le risque d'une absence de restitution à l'utilisateur (e.g. un écran noir) à la fin de la restitution du contenu de substitution est ainsi évité.

Dans un mode de réalisation, l'information de filtrage est un identifiant du contenu diffusé.

Ainsi, la quantité de données véhiculée dans le système mettant en œuvre le procédé de signalisation est minimisée, un même identifiant permettant d'indiquer aux différentes entités du système et au terminal le contenu à substituer, ainsi qu'au terminal de filtrer les messages de notifications d'événements qui lui sont destinés.

Dans un mode de réalisation, l'au moins une action définie via la première information de substitution encapsulée appartient au groupe comprenant :
- une préparation à une substitution ;
- un décodage du contenu ciblé ;
- une restitution du contenu ciblé sous une forme décodée ;
- une reprise du décodage du contenu diffusé ; et
- une restitution d'un élément d'attente.

Ainsi, la méthode revendiquée permet de signaler au terminal qu'il doit démarrer le décodage du contenu ciblé ou du contenu diffusé via un message de notification ne contenant aucune information temporelle concernant la date (en référence au contenu diffusé) à laquelle ce basculement de décodage doit avoir lieu. Il en est de même pour la restitution du contenu ainsi décodé, par exemple sur un écran du terminal.

Par ailleurs, un message d'attente (e.g. un logo en mouvement, un GIF (pour « Graphics Interchange Format » en anglais) animé, une séquence inter publicité, un message d'attente audio, etc.) peut être restitué (de manière visuelle et/ou de manière sonore) pendant que le décodeur initie un nouveau décodage, évitant par là-même une absence de restitution à l'utilisateur (e.g. un écran noir) pendant ce temps-là.

Dans un mode de réalisation, l'exécution par le terminal de ladite au moins une action est effectuée avec une latence d'exécution effective prédéterminée, différente d'une latence intrinsèque du terminal et commune avec au moins un autre terminal pour lequel est également ciblé le contenu de substitution.

Par exemple, la latence d'exécution effective prédéterminée correspond à la latence intrinsèque dudit terminal (i.e. à la latence minimale liée à l'implémentation matérielle du terminale) à laquelle est ajoutée un délai (e.g. une temporisation) permettant d'obtenir la latence d'exécution effective prédéterminée en question. Ainsi, un message de notification d'événement inséré dans le flux de données à un instant donné conduit à une exécution de l'action correspondante à un même instant par tous les terminaux mettant en œuvre la même latence d'exécution effective prédéterminée et recevant le message de notification d'événement en question.

Dans un mode de réalisation, le terminal est un terminal hybride supportant le standard HbbTV, pour « Hybrid Broadcast Broadband TV » en anglais.

Dans un mode de réalisation, le flux de données est au format MPEG-TS, pour « Moving Picture Experts Group - Transport Stream » en anglais et l'au moins un message de notification d'événement est un « stream event » au format DSM-CC, pour « Digital Storage Media Command and Control » en anglais.

Ainsi, la première information correspond au champ « Component_TAG » indiquant le PID (pour « Packet IDentifier » en anglais) dans lequel sont insérés les évènements de notification, et la deuxième information correspond au champ « Event_ID » identifiant les évènements de notification selon ce standard.

L'invention concerne également un programme d'ordinateur comprenant des instructions de code de programme pour la mise en œuvre d'un procédé de signalisation ou d'un procédé de substitution (selon l'un quelconque de ses différents modes de réalisation), lorsqu'il est exécuté sur un ordinateur.

Dans un autre mode de réalisation de l'invention, il est proposé un système de diffusion configuré pour signaler, à un terminal, la substitution d'un contenu diffusé via un réseau de diffusion auquel est connecté le terminal par un contenu de substitution ciblé au moins pour le terminal. Un tel système de diffusion comprend :
- des moyens d'obtention d'au moins un paquet d'informations de substitution comprenant une information temporelle indicative d'un instant d'exécution par le terminal d'au moins une action pour la substitution du contenu diffusé par le contenu de substitution ;
- des moyens de génération d'au moins un message de notification d'événement induisant par le terminal une exécution de ladite au moins une action, l'exécution étant déclenchée par une réception dudit au moins un message de notification d'événement par le terminal et effectuée sans connaissance de l'information temporelle ; et
- des moyens d'insertion, dans un flux de données véhiculant le contenu diffusé au sein du réseau de diffusion, de l'au moins un message de notification d'événement à un emplacement temporel fonction de l'information temporelle.

Un tel système de diffusion est notamment apte à mettre en œuvre le procédé de signalisation selon l'invention (selon l'un quelconque des différents modes de réalisation précités).

Ainsi, les caractéristiques et avantages de ce système sont les mêmes que ceux du procédé de signalisation décrit précédemment. Par conséquent, ils ne sont pas détaillés plus amplement.

Dans un autre mode de réalisation de l'invention, il est proposé un terminal configuré pour substituer un contenu diffusé via un réseau de diffusion auquel est connecté le terminal par un contenu de substitution ciblé au moins pour le terminal. Un tel terminal comprend :
- des moyens de réception d'au moins un message de notification d'événement inséré dans un flux de données véhiculant le contenu diffusé au sein du réseau de diffusion ; et
- des moyens d'exécution d'au moins une action pour la substitution du contenu diffusé par le contenu de substitution, l'exécution étant déclenchée par la réception dudit au moins un message de notification d'événement par le terminal et effectuée sans connaissance d'une information temporelle indicative d'un instant d'exécution par le terminal de ladite au moins une action.

Un tel terminal est notamment apte à mettre en œuvre le procédé de substitution selon l'invention (selon l'un quelconque des différents modes de réalisation précités).

Ainsi, les caractéristiques et avantages de ce terminal sont les mêmes que ceux du procédé de substitution précédemment. Par conséquent, ils ne sont pas détaillés plus amplement.

### 4 LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 illustre un exemple de système de diffusion télévisuelle auquel est connecté un terminal, selon un mode de réalisation de l'invention ;
- les figures 2a et 2b illustrent des exemples de structures de paquets de données et de message de notification d'événement, tels qu'utilisés pour la signalisation entre les entités de la figure 1 ;
- la figure 3 illustre les étapes d'un procédé de signalisation, à un terminal, de la substitution d'un contenu diffusé via un réseau de diffusion selon différents modes de réalisation de l'invention ;
- la figure 4 illustre les étapes d'un procédé de substitution, par un terminal, d'un contenu diffusé via un réseau de diffusion selon différents modes de réalisation de l'invention ;
- la figure 5 illustre un exemple de séquencement d'insertion de messages de notifications d'événements dans un flux de données selon un mode de réalisation de l'invention ;
- la figure 6 illustre un exemple de structure d'un système de diffusion permettant la mise en œuvre du procédé de la figure 3 ; et
- la figure 7 illustre un exemple de structure d'un terminal permettant la mise en œuvre du procédé de la figure 4.

### 5 DESCRIPTION DETAILLEE DE L'INVENTION

Sur toutes les figures du présent document, les éléments et étapes identiques sont désignés par une même référence.

Le principe général de la technique décrite consiste à obtenir au moins un paquet d'informations de substitution comprenant une information temporelle indicative d'un instant d'exécution par un terminal d'au moins une action pour la substitution d'un contenu diffusé par un contenu de substitution. Un message de notification d'événement est généré et inséré dans un flux de données véhiculant le contenu diffusé au sein d'un réseau de diffusion à un emplacement temporel indiqué par l'information temporelle en question. Le message de notification d'événement induit l'exécution de l'au moins une action en question. L'exécution est déclenchée par une réception dudit un message de notification d'événement par le terminal et est effectuée sans connaissance de l'information temporelle indicative de l'instant d'exécution par le terminal de ladite au moins une action en question.

Ainsi, la signalisation de la substitution peut s'appuyer sur des standards déjà implémentés dans certains terminaux bien que non dédiés à la signalisation d'événements dits « temps réels », i.e. des standards dont les messages de notifications ne contiennent pas de référence temporelle permettant une exécution synchrone par rapport au flux de données diffusé.

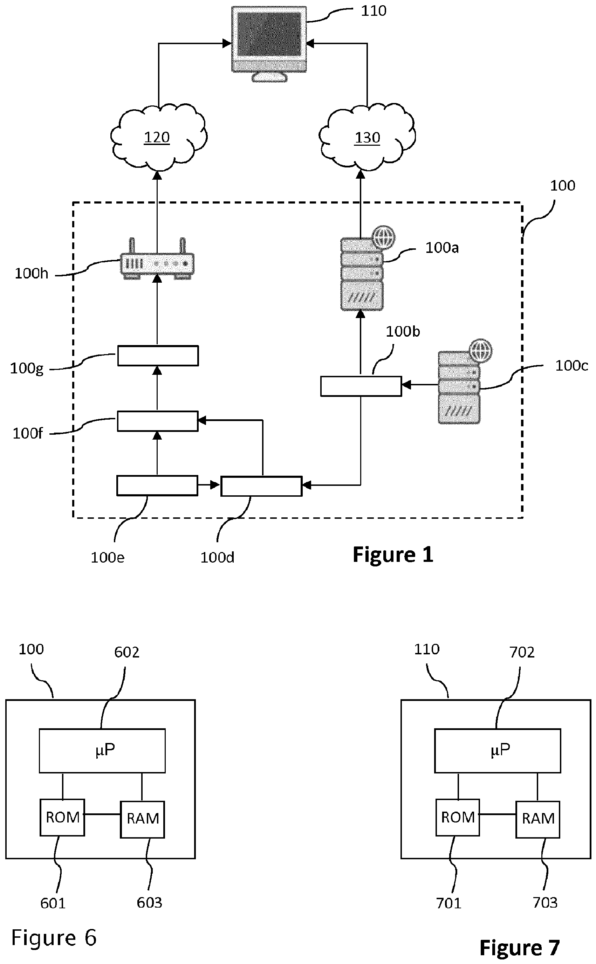

On décrit maintenant, en relation avec la **figure 1****,** un exemple de système 100 de diffusion télévisuelle auquel est connecté un terminal 110 selon un **premier mode de réalisation** de l'invention.

Plus particulièrement, le terminal 110 est un téléviseur grand public connecté d'une part à un réseau de diffusion 120 télévisuelle et d'autre part à un réseau large bande 130 du type internet. Un tel terminal 110 est parfois aussi appelé « TV connectée », « SmartTV », « Digital TV », « Internet TV », « Interactive TV », « hybrid TV », « PCTV », « Hybrid Broadcast Broadband TV », « HbbTV », ou « H4TV ».

Le terminal 110 est compatible avec le standard HbbTV de sorte à pouvoir télécharger, via le réseau large bande 130, une application HbbTV particulière (permettant la mise en œuvre de la substitution par le terminal 110, comme détaillé ci-après) depuis un serveur internet statique 100a. Un tel téléchargement se fait sur la base d'informations reçues (e.g. une adresse du type URL (pour « Uniform Resource Locator » en anglais)) par exemple via une table DVB AIT (pour « Digital Video Broadcasting » et « Application Information Table » en anglais) contenue dans le flux de données au format MPEG-TS reçu du système 100 de diffusion télévisuelle via le réseau de diffusion 120.

Plus particulièrement, le réseau de diffusion 120 est par exemple un réseau TNT (pour « Télévision Numérique Terrestre ») utilisant le standard DVB-T pour diffuser le flux de données au format MPEG-TS.

Dans des variantes, le réseau de diffusion 120 est un réseau satellite utilisant le standard DVB-S, ou un réseau câble utilisant le standard DVB-C.

Dans d'autres variantes, le réseau de diffusion 120 s'identifie à un réseau basé sur l'usage d'un protocole de transport sur IP et le terminal 110 est par exemple une « Set-top-box » incluant (ou communiquant avec) une passerelle de réseau connectée au réseau large bande 130. Un tel protocole de transport sur IP est par exemple le protocole UDP/IP (pour « User Datagram Protocol » en anglais) permettant une diffusion du type multicast, ou le protocole TCP/IP (pour « Transmission Control Protocol » en anglais) permettant une diffusion du type unicast telle que privilégiée par les diffuseurs dits OTT (pour « Over The Top » an anglais). Dans certaines variantes, le réseau basé sur l'usage d'un protocole de transport sur IP partage des ressources physiques avec le réseau large bande 130.

Le terminal 110 est configuré pour recevoir des messages de notifications d'événements (230) contenus dans le flux de données au format MPEG-TS véhiculé par le réseau de diffusion 120. Ces messages de notifications d'événements (230) sont par exemple des « StreamEvents » au format DSM-CC (pour « Digital Storage Media Command and Control » en anglais).

Le système 100 de diffusion télévisuelle comprend une plateforme de gestion des publicités 100c qui fournit, à un dispositif de gestion de la substitution 100b (discuté plus en détails ci-dessous), notamment une information d'identification (2120b31) destinée à être encapsulée dans un message de notification d'événement (230) à destination du terminal 110.

Dans certaines variantes de signalisation, l'information d'identification (2120b31) identifie une action à exécuter par le terminal 110. Une telle action est par exemple : un décodage d'un contenu ciblé pour le terminal 110, une restitution du contenu ciblé sous une forme décodée, une reprise du décodage du contenu diffusé, une restitution d'un élément d'attente, etc.

Dans d'autres variantes de signalisation, l'information d'identification (2120b31) identifie un évènement particulier. Un tel événement est par exemple : le début du contenu diffusé à substituer, la fin du contenu diffusé à substituer, etc. En d'autres termes, dans ce cas les messages de notifications d'événements balisent le flux de données véhiculant le contenu diffusé. Le terminal déduit ainsi de l'événement qui lui est notifié une ou plusieurs actions à réaliser pour la substitution du contenu diffusé (e.g. via l'exécution d'un algorithme qui prend en compte une ou plusieurs informations d'identification (2120b31) identifiant de tels évènements particuliers).

La plateforme de gestion des publicités 100c fournit au dispositif de gestion de la substitution 100b en outre :
- une première information (2120b1) permettant d'identifier une composante de flux élémentaire du flux de données au format MPEG-TS (e.g. le champ « component_tag » au format DSM-CC, ce champ indiquant le PID de la composante de flux élémentaire en question) ;
- une deuxième information (2120b2) permettant d'identifier un flux d'événements dans la composante de flux élémentaire en question (e.g. le champ « event_id » au format DSM-CC) dans lequel un codeur vidéo 100f va insérer les messages de notifications d'événements (230) à destination du terminal 110 ; et
- une information de filtrage (2120b32) permettant au terminal 110 de filtrer les messages de notifications d'événements (230) qui lui sont destinés parmi les messages de notifications d'événements (230) présents dans le flux d'événements de la composante de flux élémentaire identifié par les première (2120b1) et deuxième (2120b2) informations.

Pour ce faire, la plateforme de gestion des publicités 100c obtient tout d'abord auprès du diffuseur qui gère le réseau de diffusion 120 le champ « triplet DVB » lui permettant d'identifier de manière unique le contenu diffusé via le réseau de diffusion 120 en question, ainsi qu'un identifiant (2120b33) (e.g. un champ « Advert_ID »), permettant d'identifier une publicité à venir dans le flux diffusé. Dans des variantes, un tel identifiant véhicule également d'autres informations (e.g. un champ « Slot_ID ») relatives à la publicité à venir en question, par exemple l'identifiant d'occurrence de passage de cette publicité sur une période prédéfinie (e.g. depuis le début de la journée, sur la semaine écoulée, etc.). De la sorte, la plateforme de gestion des publicités 100c décide ou non de la substitution de la publicité à venir en question sur le terminal 110.

Lorsque la décision de substituer la publicité identifiée par l'identifiant (2120b33) est prise, la plateforme de gestion des publicités 100c génère ainsi les première (2120b1) et deuxième (2120b2) informations ainsi que l'information de filtrage (2120b32). Plus particulièrement, les informations en question sont transmises à un dispositif de gestion de la substitution 100b qui les retransmet :
- d'une part au serveur internet statique 100a qui les transmet à son tour au terminal 110 via le réseau large bande 130 (e.g. via un fichier au format XML (pour « eXtensible Markup Language » en anglais) pour les première (2120b1) et deuxième (2120b2) informations, et via l'application HbbTV pour l'information de filtrage (2120b33)). Comme discuté ci-dessus, de telles informations permettent au terminal 110 de recevoir et filtrer les messages de notifications d'événements (230) qui lui sont destinés à fin d'exécution de l'action correspondante ; et
- d'autre part à un dispositif de déclenchement d'insertion 100d, dont une fonction est de permettre de synchroniser les événements générés par la plateforme de gestion des publicités 100c avec le flux de données diffusé via le réseau de diffusion 120.

Pour ce faire, la plateforme de gestion des publicités 100c fournit également l'identifiant (2120b33) du contenu diffusé à substituer au dispositif de déclenchement d'insertion 100d (via le dispositif de gestion de la substitution 100b), ainsi que l'information d'identification (2120b31) (cette information d'identification (2120b31) permettant d'identifier, directement ou indirectement, une action à exécuter par le terminal 110 comme décrit ci-dessus).

Par ailleurs, le dispositif de déclenchement d'insertion 100d obtient du lecteur SDI 100e des références temporelles synchrones du flux de données SDI qu'il génère (flux SDI qui est destiné à être multiplexé dans le flux de données diffusé via le réseau de diffusion 120 après encodage dans un codeur vidéo 100f, multiplexage effectué par un multiplexeur MPEG/DVB 100g, et génération du signal modulé de diffusion par un modulateur DVB 100h), par exemple en allant lire périodiquement de telles informations sur le lecteur SDI 100e.

Ainsi, sur la base de l'identifiant (2120b33) du contenu diffusé à substituer reçu du dispositif de gestion de la substitution 100b, le dispositif de déclenchement d'insertion 100d détermine l'information temporelle synchrone du flux SDI qui définit un instant auquel l'action identifiée par l'information d'identification (2120b31) doit être exécutée par le terminal 110.

Selon le premier mode de réalisation illustré sur la figure 1, les informations temporelles sont des « timecodes » au format SCTE 104. De la sorte, le dispositif de déclenchement d'insertion 100d génère des paquets d'informations de substitution (210) au format SCTE 104 et les transmet au codeur vidéo 100f (e.g. via une connexion internet) afin que ce codeur les convertisse au format SCTE 35 et les insère de manière synchrone dans le flux de données encodé qu'il délivre.

Dans un **deuxième mode de réalisation** (non illustré sur la figure 1, mais aisément déductible de cette figure sur la base des explications qui suivent), les informations temporelles sont non pas des « timecodes » au format SCTE 104, mais des « timestamps » PTS (pour « Présentation Time Stamps » en anglais) au format SCTE 35. Dans ce cas, le dispositif de déclenchement d'insertion 100d génère des paquets d'informations de substitution (220) au format SCTE 35 et les transmet non pas au codeur vidéo 100f, mais directement au multiplexeur MPEG/DVB 100g (e.g. via une connexion internet) pour génération des messages de notifications d'événements (230) correspondant et insertion synchrone dans le flux de données multiplexé que ce multiplexeur délivre.

Dans un **troisième mode de réalisation** (non illustré sur la figure 1, mais également aisément déductible de cette figure sur la base des explications qui suivent), le dispositif de déclenchement d'insertion 100d ne transmet aucun paquet d'informations de substitution (210, 220) ni au codeur vidéo 100f, ni au multiplexeur MPEG/DVB 100g. A contrario, le dispositif de déclenchement d'insertion 100d transmet les informations initialement transmises par la plateforme de gestion des publicités 100c (notamment l'information d'identification (2120b31), les première (2120b1) et deuxième (2120b2) informations, l'information de filtrage (2120b32) et l'identifiant (2120b33) du contenu diffusé à substituer tels qu'introduits ci-dessus) directement au lecteur SDI 100e. Dans ce troisième mode de réalisation, c'est le lecteur SDI 100e qui effectue les opérations décrites ci-dessus de génération des paquets d'informations de substitution (210) à fin d'insertion synchrone dans le flux de données SDI.

Quel que soit le mode de réalisation du système 100 considéré, le dispositif de gestion de la substitution 100b gère la cohérence des données fournies au terminal 110 par le serveur internet statique 100a via le réseau large bande 130, et la signalisation contenue dans le flux de données reçu par le terminal 110 via le réseau de diffusion 120.

Dans des variantes de signalisation entre les entités de la figure 1, l'information de filtrage (2120b32) est identique à l'identifiant (2120b33) du contenu diffusé à substituer. Ainsi, la quantité d'information gérée et transmise par la plateforme de gestion des publicités 100c est minimisée, simplifiant par là-même l'implémentation de la technique décrite.

Enfin, dans d'autres variantes de signalisation, la plateforme de gestion des publicités 100c fournit également, au dispositif de gestion de la substitution 100b, des informations d'insertion (2120b4) indiquant si une image permettant d'initier un décodage du flux de données par le terminal 110 (e.g. une image à codage interne du type intra ou image I placée au début d'un GOP) doit être insérée par le codeur vidéo 100f dans le flux de données en question, par exemple après un message de notification d'événement (230).

Au vu de la description ci-dessus, il apparaît ainsi que le système 100 de diffusion télévisuelle comprend également le lecteur SDI 100e, qui génère un flux au format SDI envoyé au codeur vidéo 100f. Le lecteur SDI est par exemple un lecteur spectrumX commercialisé par la société Harmonie. Un tel équipement est notamment apte à insérer des commandes au format SCTE 104 dans le flux SDI qu'il délivre.

Selon le premier mode de réalisation (illustré sur la figure 1), le lecteur SDI 100e fournit au dispositif de déclenchement d'insertion 100d les références temporelles synchrones du flux de données SDI qu'il génère.

Dans le troisième mode de réalisation précité (non illustré sur la figure 1), le lecteur SDI 100e génère lui-même les paquets d'informations de substitution (210) sur la base des informations fournies par le dispositif de déclenchement d'insertion 100d et les insère dans le flux SDI qu'il délivre.

Le système 100 de diffusion télévisuelle comprend également le codeur vidéo 100f, qui génère le flux MPEG-TS au format MPEG4 à partir du flux au format SDI reçu du lecteur SDI 100e. Le codeur vidéo 100f est notamment apte à transformer des commandes au format SCTE 104 présentes dans le flux SDI reçu en commandes au format SCTE 35. Plus particulièrement, le codeur vidéo 100f est capable de transformer les références temporelles (ou « timecodes ») utilisées par le standard SCTE 104 en références temporelles PTS utilisées par le standard SCTE 35.

De la sorte, suivants que les paquets d'informations de substitution (210, 220) reçus (soit du dispositif de déclenchement d'insertion 100d dans le premier mode de réalisation, soit via le flux SDI dans le deuxième mode de réalisation) contiennent des informations d'insertion (2120b4) ou non, le codeur vidéo 100f :
- convertit les paquets d'informations de substitution (210) au format SCTE 104 présents dans le flux SDI reçu en paquets d'informations de substitution (220) au format SCTE 35 insérés dans le flux MPEG-TS qu'il délivre au multiplexeur MPEG/DVB 100g à fin de propagation des informations autres que celles d'insertion (2120b4) ; et/ou
- insère une image permettant d'initier un décodage, par le terminal 110, du flux de données (e.g. une image à codage interne du type intra ou image I placée au début d'un GOP) dans le flux de données qu'il délivre lorsque une information d'insertion (2120b4) est reçue, l'image en question étant insérée à l'endroit indiqué par l'information temporelle présente dans le paquet d'informations de substitution (210) correspondant.

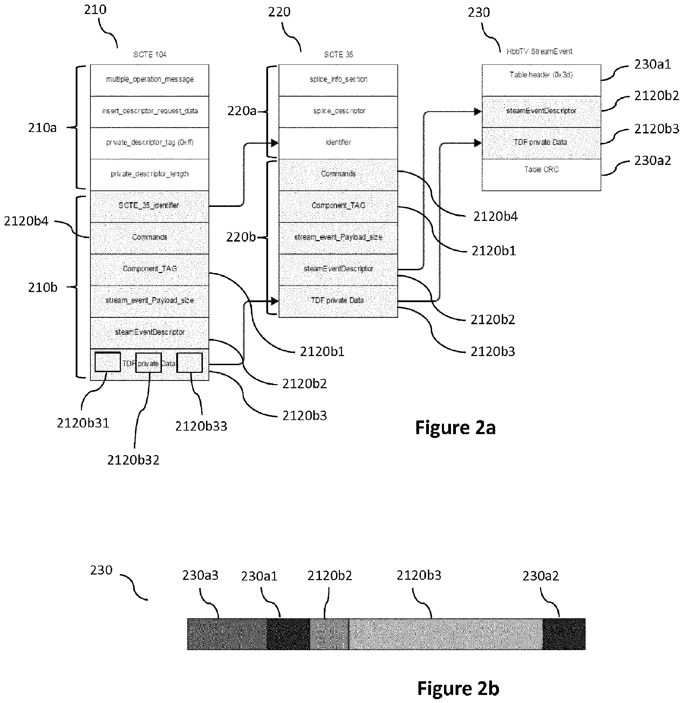

Dans des variantes de signalisation, le codeur vidéo 100f ne reçoit pas d'informations d'insertion (2120b4) (e.g. la plateforme de gestion des publicités 100c ne fournit pas d'informations d'insertion (2120b4)), mais insère systématiquement, à un endroit temporel fonction de l'information temporelle présente dans le paquet d'informations de substitution (210) considéré, une image permettant d'initier un décodage, par le terminal 110, du flux de données. Plus particulièrement, l'image en question est insérée de manière à minimiser les transitions au moment des basculements de décodage au niveau du terminal comme discuté ci-dessous en relation avec les figures 2a et 2b. Cet aspect systématique de l'insertion permet de minimiser la quantité d'information transmise entre les entités du système 100 de diffusion télévisuelle.

Par ailleurs, le système 100 de diffusion télévisuelle comprend également le multiplexeur MPEG/DVB 100g, qui produit le signal multiplexé (ou « multiplex ») qui est diffusé via le réseau de diffusion 120 sur la base du flux MPEG-TS délivré par le codeur vidéo 100f.

Dans des variantes, le multiplexeur MPEG/DVB 100g agrège les flux venant de plusieurs codeurs vidéo pour produire le multiplex qui sera ensuite diffusé.

Par ailleurs, sur la base des paquets de données (220) au format SCTE 35 reçus (soit via le flux MPEG-TS en provenance du codeur vidéo 100f dans le premier mode de réalisation, soit directement du dispositif de déclenchement d'insertion 100d dans le deuxième mode de réalisation), le multiplexeur MPEG/DVB 100g génère les messages de notifications d'événements (230) correspondants, ici des messages « StreamEvents » au format DSM-CC.

Comme discuté ci-dessous en relation avec les figures 2a et 2b, de tels messages de notifications d'événements (230) encapsulent les informations véhiculées par les paquets d'informations de substitution (220), et notamment la deuxième (2120b2) information, l'information d'identification (2120b31), l'information de filtrage (2120b32) ainsi que l'identifiant (2120b33) du contenu diffusé à substituer (l'information de filtrage (2120b32) pouvant être égal à cet identifiant (2120b33) dans certaines variantes de signalisation) ; dans ce cas, un seul champ contenant l'information en question est encapsulé dans le message de notification d'événement (230) correspondant, minimisant par là-même la quantité d'information véhiculée).

Par ailleurs, le multiplexeur MPEG/DVB 100g insère le message de notification d'événement (230) dans le flux multiplexé qu'il génère à l'endroit temporel identifié par l'information temporelle contenue dans le paquet d'informations de substitution (220) correspondant. Il est cependant notable que le message de notification d'événement (230) ne contient lui-même aucune information relative à une date d'exécution par le terminal 110 de la ou des action(s) correspondant à l'information d'identification (2120b31) encapsulée dans le message de notification d'événement (230) en question.

Plus particulièrement, un tel message de notification d'événement (230) est inséré dans le flux d'événement identifié par la deuxième information (2120b2) au sein de la composante de flux élémentaire identifiée par la première information (2120b1) à l'instant identifié par l'information temporelle comprise dans le paquet d'informations de substitution (220) correspondant.

Enfin, le système 100 de diffusion télévisuelle comprend également le modulateur DVB 100h, qui génère le signal modulé transportant le flux de données délivré par le multiplexeur MPEG/DVB 100g au travers du réseau de diffusion 120.

On décrit maintenant, en relation avec les **figures 2a et 2b****,** des exemples de structures de paquets de données 210, 220 ainsi que de message de notification d'événement 230 tels qu'utilisés pour la signalisation entre les entités de la figure 1.

Dans le premier mode de réalisation (illustré sur la figure 1), les paquets de données 210 échangés entre le dispositif de déclenchement d'insertion 100d et le codeur vidéo 100f sont au format SCTE 104, ce format étant interprétable par le codeur vidéo 100f en question.

De même, de tels paquets de données 210 au format SCTE 104 sont également utilisés par le lecteur SDI 100e dans le troisième mode de réalisation (non illustré sur la figure 1) à fin de transmission au codeur vidéo 100f.

Plus particulièrement, un tel paquet de données 210 comprend un entête 210a et un champ de données utiles 210b.

Plus particulièrement encore, l'entête 210a comprend des champs d'entête spécifiques au standard SCTE 104, et notamment un champ encapsulant l'information temporelle introduite ci-dessus en relation avec la figure 1 (i.e. l'information temporelle obtenue par le dispositif de déclenchement d'insertion 100d sur la base à la fois de l'identifiant 2120b33 du contenu diffusé à substituer délivré par la plateforme de gestion des publicités 100c via le dispositif de gestion de la substitution 100b, et des données temporelles liées au flux SDI fournies par le lecteur SDI 100e).

De même, le champ de données utiles 210b comprend notamment les données initialement délivrées par la plateforme de gestion des publicités 100c via le dispositif de gestion de la substitution 100b introduites ci-dessus en relation avec la figure 1, à savoir :
- d'une part :
   - la première information 2120b1 (e.g. le champ « component_tag » au format DSM-CC) ; et
   - la deuxième information 2120b2 (e.g. le champ « event_id » au format DSM-CC) ; et
- d'autre part, regroupés dans un champ de données propriétaires 2120b3 :
   - l'information d'identification 2120b31 identifiant une action à exécuter par le terminal 110 ;
   - l'information de filtrage 2120b32 ; et
   - l'identifiant 2120b33 du contenu diffusé à substituer.

Comme décrit ci-dessus en relation avec la figure 1, dans certaines variantes de signalisation l'information de filtrage 2120b32 est égale à l'identifiant 2120b33. Dans ce cas, un seul champ contenant l'information en question est encapsulé dans le message de notification d'événement 230 correspondant, minimisant par là-même la quantité d'information véhiculée.

Par ailleurs, l'information temporelle encapsulée dans l'entête du paquet indique un emplacement dans le flux de données diffusé via le réseau de diffusion 120 auquel le message de notification d'événement 230 correspondant doit être inséré afin de déclencher au moins une action par le terminal 110 à un instant adéquat pour la substitution voulue. Ceci quand bien même le message de notification d'événement 230 en question ne contient pas d'information temporelle relative à leur exécution.

Le codeur vidéo 100f convertit le paquet de données 210 au format SCTE 104 en un paquet de données 220 au format SCTE 35 de la même manière qu'il transforme le flux de données du format SDI en un flux MPEG-TS.

Les champs de données 2120b1 à 2120b4 décrits ci-dessus se trouvent alors encapsulés dans la partie des données utiles 220b du paquet de données 220 au format SCTE 35.

Par ailleurs, l'information temporelle encapsulée dans l'entête 210a du paquet de données 210 au format SCTE 104 est convertie en une nouvelle information temporelle encapsulée dans un entête 210b du paquet de données 220 au format SCTE 35. Plus particulièrement, le « timecode » au format SCTE 104 est converti en « timestamp » PTS (pour « Présentation Time Stamps » en anglais) au format SCTE 35 de manière à toujours indiquer un emplacement, dans le flux de données diffusé via le réseau de diffusion 120, auquel le message de notification d'événement 230 correspondant doit être inséré de manière cohérente avec les informations initialement délivrées par la plateforme de gestion des publicités 100c.

Le paquet de données 220 au format SCTE 35 est alors inséré dans le flux MPEG-TS au format MPEG4 généré par le codeur vidéo 100f avant transmission au multiplexeur MPEG/DVB 100g.

Un tel paquet de données 220 au format SCTE 35 est également utilisé par le dispositif de déclenchement d'insertion 100d à fin de transmission directement au multiplexeur MPEG/DVB 100g dans le deuxième mode de réalisation (non illustré sur la figure 1).

Par ailleurs dans les variantes de signalisation précitées dans lesquelles la plateforme de gestion des publicités 100c fournit en outre au dispositif de gestion de la substitution 100b les informations d'insertion 2120b4, le champ de données utiles 210b comprend également les informations d'insertion 2120b4 (e.g. via un champ « command » par exemple) en question.

Dans ce cas, une autre information temporelle encapsulée dans l'entête du paquet de données 210 indique un emplacement dans le flux de données diffusé via le réseau de diffusion 120 auquel l'image permettant d'initier un décodage, par le terminal 110, du flux de données doit être insérée.

Ainsi, le codeur vidéo 100f insère l'image en question dans le flux de données à un emplacement temporel indiqué par l'autre information temporelle encapsulée dans l'entête du paquet de données 210 en question.

Le multiplexeur MPEG/DVB 100g convertit le paquet de données 220 au format SCTE 35 en un message de notification d'événement 230, ou « StreamEvent » au format DSM-CC.

Un tel message de notification d'événement 230 comprend :
- d'une part :
   - la deuxième information 2120b2 (e.g. le champ « event_id » au format DSM-CC) ; et
   - d'autre part, les données propriétaires 2120b3, à savoir :
      o l'information d'identification 2120b31 identifiant une action à exécuter par le terminal 110 ;
      o l'information de filtrage 2120b32 ; et
      o l'identifiant 2120b33 du contenu diffusé à substituer (ce dernier champ pouvant être absent dans certaines variantes de signalisation où l'information de filtrage 2120b32 est égale à l'identifiant 2120b33).

Par ailleurs, le message de notification d'événement 230 comprend les champs standardisés des messages « StreamEvent » au format DSM-CC, à savoir un champ contenant un entête de table 230a1 (ou « table header » en anglais), un champ contenant un CRC (pour « cyclic redundancy check » en anglais) de table 230a2 (ou « table CRC » en anglais), et un champ d'entête 230a3 (ou « packet header » en anglais).

Enfin, le multiplexeur MPEG/DVB 100g insère un tel message de notification d'événement 230 dans la composante de flux élémentaire identifiée par la première information 2120b1, et à l'instant défini par l'information temporelle encapsulée dans l'entête 210b du paquet de données 220 au format SCTE 104 correspondant.

Ainsi, l'instant auquel le message de notification d'événement 230 est inséré dans le flux délivré par le multiplexeur MPEG/DVB 100g est contrôlé de manière précise par le système 100.

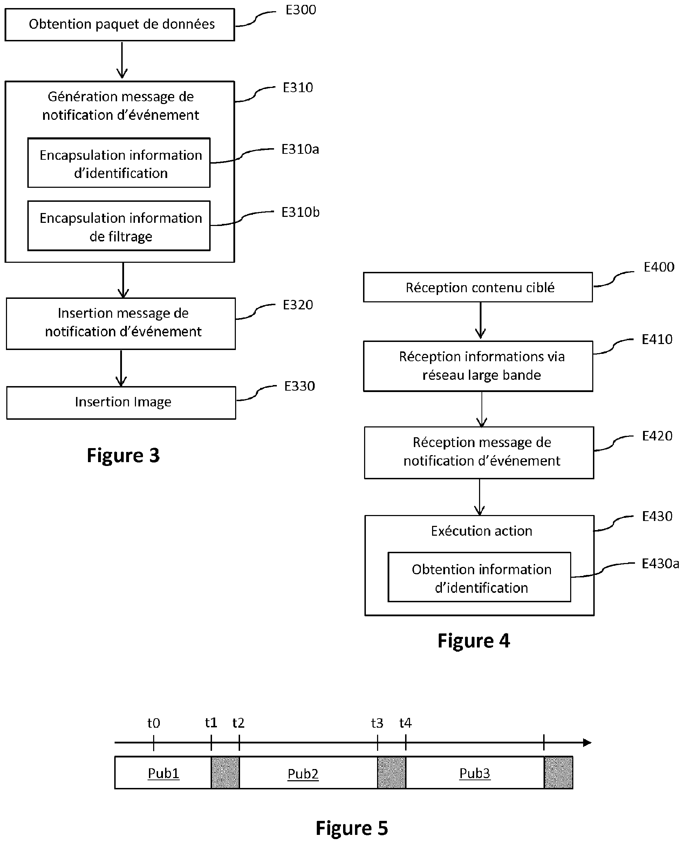

On décrit maintenant, en relation avec les **figures 3 et 4****,** les étapes d'un procédé de signalisation, au terminal 110, de la substitution d'un contenu diffusé via le réseau de diffusion 120, ainsi que les étapes d'un procédé de substitution, par le terminal 110, d'un contenu diffusé via le réseau de diffusion 120, selon différents modes de réalisation de l'invention.

Lors d'une étape d'obtention E300 mise en œuvre au sein du système 100, un paquet d'informations de substitution 220 au format SCTE 35, comprenant une information temporelle indicative d'un instant d'exécution par le terminal 110 d'au moins une action pour la substitution du contenu diffusé par le contenu de substitution, est obtenu par le multiplexeur MPEG/DVB 100g.

Plus particulièrement, suivant le mode de réalisation considéré (parmi les premier, deuxième et troisième), le paquet d'informations de substitution 220 au format SCTE 35 obtenu par le multiplexeur MPEG/DVB 100g est fourni soit par le codeur vidéo 100f (dans ce cas, le paquet d'informations de substitution 220 au format SCTE 35 résulte de la conversion, par le codeur vidéo 100f, d'un paquet d'informations de substitution 210 au format SCTE 104 correspondant fourni soit par le lecteur SDI 100e, soit directement par le dispositif de déclenchement d'insertion 100d), soit directement par le dispositif de déclenchement d'insertion 100d.

Lors d'une étape de génération E310 également mise en œuvre au sein du système 100, un message de notification d'événement 230 (ici un message « StreamEvent » au format DSM-CC) est généré par le multiplexeur MPEG/DVB 100g reprenant d'une part la deuxième information 2120b2 et les données propriétaires 2120b3 véhiculées dans le paquet d'informations de substitution 220 comme décrit ci-dessus en relation avec les figures 2a et 2b.

Enfin, lors d'une étape d'insertion E320 également mise en œuvre au sein du système 100, le multiplexeur MPEG/DVB 100g insère le message de notification d'événement 230 dans le flux de données véhiculant le contenu diffusé via le réseau de diffusion 120.

Plus particulièrement, le message de notification d'événement 230 est inséré dans le flux de données à un emplacement temporel fonction de l'information temporelle comprise dans le paquet d'informations de substitution 220 obtenu de la manière décrite ci-dessus.

De la sorte, lors d'une étape de réception E420 mise en œuvre par le terminal 110, le terminal 110 reçoit le message de notification d'événement 230 inséré dans le flux de données par le multiplexeur MPEG/DVB 100g.

Lors d'une étape d'exécution E430, le terminal 110 exécute l'au moins une action associée au message en question. Plus particulièrement, l'exécution en question est déclenchée par la réception du message de notification d'événement 230 par le terminal et est effectuée sans connaissance de l'information temporelle indicative de l'instant d'exécution par le terminal de ladite au moins une action en question. En d'autres termes, l'au moins une action est exécutée par le terminal 110, immédiatement à réception du message de notification d'événement 230, après une latence d'exécution uniquement liée à des contraintes d'implémentations matérielle dans le terminal (aucune information temporelle d'exécution de l'au moins une action en question n'étant présente par ailleurs dans le message de notification d'événement 230 ni fournie au terminal par tout autre moyen). Il s'agit dans ce cas d'un fonctionnement temps réel du terminal, i.e. l'au moins une action est exécutée au plus tôt dès la réception du message de notification d'événement 230. Cependant, dans certains modes de réalisation la latence d'exécution en question peut prendre en compte une temporisation d'une durée prédéterminée fixe, par exemple afin que le procédé de signalisation selon l'invention soit supporté par différents types de terminaux comme discuté ci-dessous en relation avec la figure 5. Une telle temporisation ne dépend dans ce cas que de la nature du terminal et n'est pas indicative de l'instant d'exécution par le terminal de ladite au moins une action en question.

De la sorte, seul l'instant d'insertion des messages de notifications d'événements dans le flux de données permet de contrôler les instants d'exécution des actions en question par le terminal 110.

Ainsi, la signalisation de la substitution s'appuie sur l'implémentation dans le terminal 110 de standards existants bien que non dédiés à la signalisation d'événements dits « temps réels », i.e. dont les messages de notifications ne contiennent pas de référence temporelle permettant une exécution synchrone par rapport au flux de données diffusé (ici des messages « streamevent » au format DSM-CC dans les modes de réalisation considérés).

Plus particulièrement, l'étape de génération E310 mise en œuvre au sein du système 100 comprend une sous-étape d'encapsulation d'au moins une information d'identification 2120b31 dans le message de notification d'événement 230.

De manière symétrique, l'étape d'exécution E430 mise en œuvre par le terminal 110 comprend une sous-étape d'obtention E430a, par le terminal 110, de l'au moins une information d'identification 2120b31 dans le message de notification d'événement 230.

Dans certaines variantes de signalisation, l'au moins une action et fonction de l'au moins une information d'identification 2120b31. Ainsi, une action particulière à exécuter est signalée de manière simple et directe au terminal.

Dans d'autres variantes de signalisation, le message de notification d'événement 230 comprend une unique information d'identification 2120b31 pouvant prendre plusieurs valeurs associées chacune, dans le terminal, à un jeu distinct d'au moins une action.

Ainsi, un événement particulier (e.g. le début du contenu diffusé à substituer, la fin du contenu diffusé à substituer, etc.) est signalé au terminal via l'unique information d'identification 2120b31. En d'autres termes, dans ces variantes les messages de notifications d'événements balisent le flux de données véhiculant le contenu diffusé.

Le terminal déduit ainsi de l'événement qui lui est notifié une ou plusieurs actions à réaliser pour la substitution du contenu diffusé.

Dans certaines variantes, la ou les actions à réaliser sont obtenues dans le terminal via un algorithme prenant en compte l'évènement en question mais également d'autres événements qui ont été signifiés au terminal antérieurement à l'évènement en question le cas échéant (e.g. les événements notifiés en question servent d'entrées à une machine d'état, les transitions entre états étant fonction des événements notifiés en question, les actions à réaliser étant associées à un état donné).

Plus particulièrement, de telles actions sont par exemple :
o une préparation à une substitution ;
o un décodage du contenu ciblé ;
o une restitution du contenu ciblé sous une forme décodée ;
o une reprise du décodage du contenu diffusé ; et
o une restitution d'un élément d'attente.

Pour cette dernière action de restitution d'un élément d'attente, un message d'attente (e.g. un logo en mouvement, un GIF (pour « Graphics Interchange Format » en anglais) animé, une séquence inter publicité, un message d'attente audio, etc.) est par exemple restitué (de manière visuelle et/ou sonore) pendant que le décodeur initie un nouveau décodage, évitant par là-même une absence de restitution à l'utilisateur (e.g. un écran noir) pendant ce temps-là.

Un tel jeu d'actions à effectuer, ainsi que le cas échéant le jeu d'événements et un algorithme associé, sont par exemple fournis au terminal 110 via l'application HbbTV discutée ci-dessus en relation avec la figure 1.

Par ailleurs, le paquet d'informations de substitution 220 comprend en outre :
o la première information 2120b1 permettant d'identifier une composante de flux élémentaire du flux de données véhiculant le contenu diffusé ;
o la deuxième information 2120b2 permettant d'identifier un flux d'événements dans la composante de flux élémentaire ; et
o l'information de filtrage 2120b32.

De la sorte, le message de notification d'événement 230 est inséré dans le flux d'événements en question (identifié par les première 2120b1 et deuxième 2120b2 informations).

De même, l'étape de génération E310 mise en œuvre au sein du système 100 comprend en outre une sous-étape d'encapsulation E310b de l'information de filtrage 2120b32 et de la deuxième information 2120b2 dans le message de notification d'événement 230.

Symétriquement, le terminal 110 effectue en outre une étape de réception E410 des mêmes première 2120b1 et deuxième 2120b2 informations, ainsi que de l'information de filtrage 2120b32, mais via le réseau large bande 130 (e.g. via le fichier au format XML pour les première (2120b1) et deuxième (2120b2) informations, et via l'application HbbTV pour l'information de filtrage (2120b33) comme discuté ci-dessus en relation avec la figure 1).

De la sorte, l'étape de réception E420 du message de notification d'événement 230 est fonction des première 2120b1 et deuxième 2120b2 informations, de manière à identifier le flux d'événements de la composante de flux élémentaire dans lequel le message de notification d'événement 230 a été inséré, et de l'information de filtrage 2120b32, pour identifier le message de notification d'événement 230 au sein du flux d'événements identifié.

Ainsi, sur la base de ces informations partagées entre le terminal 110 et le système 100, différents terminaux connectés au réseau de diffusion 120 peuvent être adressés de manière différentiée via différent messages de notifications d'événements 230 afin de permettre un meilleur ciblage des contenus de substitution.

Selon certaines variantes de signalisation, l'information de filtrage 2120b32 est un identifiant 2120b33 du contenu diffusé à substituer par un contenu ciblé.

Comme discuté ci-dessus en relation avec la figure 1, la quantité de données véhiculée dans le système 100 mettant en œuvre le procédé de signalisation est ainsi minimisée, un même identifiant permettant d'indiquer aux différentes entités du système 100 et au terminal 110 le contenu à substituer, ainsi qu'au terminal 110 de filtrer les messages de notification d'événement qui lui sont destinés.

Par ailleurs, dans d'autres modes de réalisation (non illustrés sur la figure 1) où une pluralité de terminaux 110 est connectée au système 100 via les réseaux de diffusion 120 et large bande 130, l'utilisation d'un identifiant 2120b33 du contenu diffusé comme information de filtrage 2120b32 pour un ensemble donné de terminaux parmi la pluralité de terminaux permet de signaler à tous les terminaux de l'ensemble en question qu'il vont devoir effectuer une substitution du même contenu diffusé (correspondant donc à l'identifiant 2120b33). Cependant, chaque terminal de l'ensemble de terminaux en question ayant reçu une application HbbTv particulière du serveur internet statique 100a via le réseau large bande 130, le contenu de substitution reste ciblé (via les informations contenues dans les applications HbbTv particulières en question) pour le terminal correspondant, quand bien même la même information de filtrage 2120b32 a été utilisée pour tous les terminaux de l'ensemble.

Par ailleurs, dans certaines variantes, une telle information de filtrage 2120b32, correspondant ou non à l'identifiant 2120b33 du contenu diffusé à substituer, permet de signaler au terminal 110 quel contenu ciblé à utiliser, parmi une pluralité de contenus ciblés préalablement téléchargés, pour effectuer la substitution du contenu diffusé.

De manière générale, le terminal 110 effectue en outre une étape de réception E400 du ou des contenus ciblés :
o soit via le réseau de diffusion 120, e.g. via un carrousel de contenus tel que défini par le standard HbbTV, permettant l'obtention du contenu ciblé même en l'absence d'une autre connexion réseau ;
o soit via le réseau large bande 130 auquel il est connecté, par exemple via l'application HbbTV, permettant de minimiser la charge du réseau de diffusion.

Par ailleurs, à la fois dans le premier mode de réalisation (illustré sur la figure 1) et dans le troisième mode de réalisation (non illustré sur cette figure 1), un paquet d'informations de substitution 210 au format SCTE 104 est obtenu par le codeur vidéo 100f soit en provenance du dispositif de déclenchement d'insertion 100d, soit en provenance du lecteur SDI 100e. Dans certaines variantes de signalisation, le paquet d'informations de substitution 210 en question comprend :
o des informations d'insertion 2120b4 indiquant si le procédé de signalisation mis en œuvre par le système 100 comprend en outre une étape d'insertion E330, par le codeur vidéo 100f, dans le flux de données, d'au moins une image permettant d'initier un décodage, par le terminal 110, du flux de données (e.g. une image à codage interne du type intra ou image I placée au début d'un GOP) ;
o une autre information temporelle indiquant un emplacement temporel d'insertion de l'au moins une image en question dans le flux de données lorsque les informations d'insertion indiquent que l'insertion en question doit être effectuée.

Plus particulièrement, l'emplacement temporel d'insertion est tel qu'un écart temporel, dans ledit flux de données, entre l'au moins une image et le message de notification d'événement 230 (inséré dans le flux lors de l'étape d'insertion E320 décrite ci-dessus) est supérieur à la latence d'exécution précitée.

De la sorte, par exemple à la fin de la substitution, la reprise du décodage par le terminal 110 du contenu diffusé signalée par le message de notification d'événement 230 peut débuter concomitamment de la réception de l'image en question par le terminal 110. Ainsi, l'attente avant le début de la reprise du décodage du contenu diffusé, et donc la durée de restitution des éléments d'attente ainsi que le risque d'une absence de restitution à l'utilisateur (e.g. un écran noir) à la fin de la restitution d'un tel élément d'attente, est minimisée.

Dans d'autres modes de réalisation du procédé de signalisation, le codeur vidéo 100f n'obtient pas d'informations d'insertion 2120b4 et exécute systématiquement l'étape d'insertion E330 de l'au moins une image en question avec un écart temporel tel que défini ci-dessus. Un tel écart temporel est par exemple prédéfini. Ainsi, la quantité d'information véhiculée au sein du système 100 est minimisée.

On décrit maintenant, en relation avec la **figure 5****,** un exemple de séquencement d'insertion de messages de notifications d'événements 230 dans un flux de données selon un mode de réalisation de l'invention. Dans l'exemple en question, on considère la diffusion via le réseau de diffusion 120 d'une séquence de trois publicités Pub1, Pub2 et Pub3 dans laquelle des séquences d'inter publicités (zones grisées) sont présentes entre chacune des trois publicités Pub1, Pub2 et Pub3. Par ailleurs, il est supposé que la deuxième publicité Pub2 est à substituer, par le terminal 110, par une publicité ciblée pour le terminal 110.

L'application des procédés de signalisation et de substitution décrits ci-dessus en relation avec les figures 3 et 4 conduit à une succession d'événements temporels détaillés ci-après.

### Instant t0

Un message de notification d'événement 230 préparatoire est inséré à l'instant t0 par le multiplexeur MPEG/DVB 100g dans le flux de données, par exemple cinq minutes avant la publicité Pub2 à substituer. Le message de notification d'événement 230 préparatoire encapsule entre autres une information d'identification 2120b31 identifiant l'événement : « préparation à une substitution ». Après une latence d'exécution uniquement liée à des contraintes d'implémentations matérielle dans le terminal à compter de la réception du message de notification d'événement 230 préparatoire (aucune information temporelle d'exécution du jeu d'actions en question n'étant fournie par ailleurs au terminal, que ce soit dans le message de notification d'événement 230 ou sous une autre forme), le terminal 110 exécute un jeu d'actions défini pour cet événement par l'application HbbTV obtenue via le réseau large bande 130 auprès du serveur internet statique 100a.

Par exemple, le terminal 110 reçoit les informations sur les publicités à substituer, ici la publicité Pub2. Il reçoit par ailleurs les publicités de substitution en mettant en œuvre l'étape E400 décrite ci-dessus en relation avec la figure 4 puis se met en attente de la réception d'un premier message de notification d'événement 230 encapsulant entre autres une information d'identification 2120b31 identifiant l'événement : « début d'inter publicité avant la publicité pub2 ».

### Instant t1

Le premier message de notification d'événement 230 identifiant l'événement : « début d'inter publicité avant la publicité pub2 » est inséré à l'instant t1 par le multiplexeur MPEG/DVB 100g dans le flux de données.

Plus particulièrement, l'instant t1 auquel le premier message de notification d'événement 230 est inséré dans le flux correspond sensiblement au début de la séquence inter publicités précédant la publicité Pub2 à substituer. En effet, en pratique un tel instant t1 peut être choisi avec une certaine tolérance par rapport au début de la séquence inter publicités en question. Dans certaines variantes, le premier message de notification d'événement 230 est inséré dans un paquet de données (e.g. un paquet de données au sens MPEG2-TS) précédant d'un ou quelques paquets le premier paquet véhiculant les données de la séquence inter publicités en question. Dans d'autres variantes, le premier message de notification d'événement 230 est inséré dans un paquet du flux de données suivant d'un ou quelques paquets le premier paquet véhiculant les données de la séquence inter publicités en question. Dans encore d'autres variantes, le premier message de notification d'événement 230 est inséré dans un paquet juste avant le paquet de données véhiculant la première image de la séquence inter publicités précédant la publicité Pub2 à substituer.

Dans une implémentation particulière, l'application HbbTV exécutée par le terminal 110 met en œuvre un délai prédéterminé fixe (dont l'utilité est précisée ci-après), qui est non reprogrammable à la volée via des messages de notification d'événement 230 ou via d'autres informations véhiculées par le flux de données, et qui fait partie de la latence d'exécution des jeux d'actions par le terminal. Une telle latence (comprenant le délai prédéterminé fixe en question) est donc uniquement liée à des contraintes d'implémentation matérielle dans le terminal, et n'est pas fonction d'informations véhiculées par le flux de données.

Le délai prédéterminé fixe permet de synchroniser l'exécution du jeu d'actions par rapport au contenu véhiculé par le flux de données. De la sorte, différents modèles de terminaux 110, ayant potentiellement des latences d'exécution intrinsèques différentes, peuvent se voir affecter une même latence d'exécution de sorte qu'un premier message de notification d'événement 230 inséré à l'instant t1 soit traité dans un même délai (en termes de synchronisation de l'exécution du jeu d'actions par rapport au contenu véhiculé par le flux de données) par tous les terminaux destinataires du premier message de notification d'événement 230, quel que soit leur type.

On rappelle que dans une solution classique, un terminal donné reçoit d'une part un identifiant de l'action à exécuter et d'autre part une information temporelle représentative de l'instant d'exécution de l'action en question. De la sorte, lorsque la base de temps courante dans le terminal correspond à l'instant d'exécution, le terminal exécute l'action à exécuter. Pour ce faire, le terminal prend en compte sa latence intrinsèque d'exécution pour que l'action en question soit effectivement exécutée à l'instant d'exécution correspondant à information temporelle reçue.

A contrario, dans la solution proposée, le terminal 110 exécute immédiatement (i.e. après une latence d'exécution donnée (prédéterminée ou intrinsèque)) un jeu d'actions défini pour cet événement par l'application HbbTV obtenue via le réseau large bande 130 auprès du serveur internet statique 100a, l'exécution étant déclenchée par la réception du premier message de notification d'événement 230. En d'autres termes, le terminal exécute le jeu d'actions sans connaissance d'une information temporelle (information qui lui aurait été fournie par ailleurs) indicative d'un instant d'exécution, par le terminal, du jeu d'actions en question.

Par exemple, le terminal 110 :
- affiche sur son écran une image d'inter publicités préalablement chargée et identique au visuel de la séquence d'inter publicités telle que diffusée. Cette opération permet de libérer un décodeur vidéo du terminal 110. L'image affichée durant cette période peut être fixe (e.g. au format jpeg ou png) ou animée (e.g. un GIF animé) ;
- initie le décodage de la publicité ciblée (le décodeur vidéo étant libéré du décodage du flux de données) ; et
- met en attente le décodeur ainsi préparé.

### Instant t2

Un deuxième message de notification d'événement 230 est inséré à l'instant t2 par le multiplexeur MPEG/DVB 100g dans le flux de données. Plus particulièrement, l'instant t2 auquel le deuxième message de notification d'événement 230 est inséré dans le flux correspond sensiblement au début de la publicité Pub2 à substituer de la même manière que le premier message de notification d'événement 230 est inséré dans le flux sensiblement au début de la séquence inter publicités précédant la publicité Pub2 à substituer comme discuté ci-dessus en relation avec l'instant t1 (i.e. avec une certaine tolérance par rapport du début de la séquence en question).

Le deuxième message de notification d'événement 230 encapsule entre autres une information d'identification 2120b31 identifiant l'événement : « début de publicité pub2 ». Après une latence d'exécution uniquement liée à des contraintes d'implémentations matérielle dans le terminal à compter de la réception du deuxième message de notification d'événement 230, le terminal 110 exécute immédiatement un jeu d'actions défini pour cet événement par l'application HbbTV. En d'autres termes, le terminal exécute le jeu d'actions sans connaissance d'une information temporelle indicative d'un instant d'exécution, par le terminal, du jeu d'actions en question. Par exemple, le terminal 110 : démarre la lecture de la publicité ciblée décodée, restitue la publicité ciblée décodée sur son écran et masque l'image d'inter publicités.

### Instant t3

Un troisième message de notification d'événement 230 est inséré à l'instant t3 par le multiplexeur MPEG/DVB 100g dans le flux de données. Plus particulièrement, l'instant t3 auquel le troisième message de notification d'événement 230 est inséré dans le flux correspond sensiblement au début de la séquence inter publicités suivant la publicité Pub2 à substituer de la même manière que le premier message de notification d'événement 230 est inséré dans le flux sensiblement au début de la séquence inter publicités précédant la publicité Pub2 à substituer comme discuté ci-dessus en relation avec l'instant t1 (i.e. avec une certaine tolérance par rapport du début de la séquence en question).

Le troisième message de notification d'événement 230 encapsule entre autres une information d'identification 2120b31 identifiant l'événement: « fin de publicité ». Ainsi, après une latence d'exécution uniquement liée à des contraintes d'implémentations matérielle dans le terminal à compter de la réception du troisième message de notification d'événement 230, le terminal 110 exécute immédiatement un jeu d'actions défini pour cet événement par l'application HbbTV. En d'autres termes, le terminal exécute le jeu d'actions sans connaissance d'une information temporelle indicative d'un instant d'exécution, par le terminal, du jeu d'actions en question. Par exemple, le terminal 110 : affiche sur son écran l'image d'inter publicités, arrête le décodage de la publicité ciblée, initie le décodage du contenu diffusé et commence l'affichage en arrière-plan du contenu diffusé décodé.

Par ailleurs, il est notifié, via un paquet d'informations de substitution 210 au format SCTE 104, au codeur vidéo 100f de placer une image permettant d'initier un décodage, par le terminal 110, du flux de données (e.g. une image I d'un début de GOP). Par exemple, il suffit que l'image soit insérée dans le flux après le troisième message de notification d'événement 230, avec un écart temporel avec le troisième message de notification d'événement 230 en question qui soit supérieur à une latence d'exécution de l'action induisant le décodage par le terminal. De la sorte, il est assuré que le décodeur prendra en compte l'image en question lorsqu'il débutera le décodage. En pratique, il est souvent suffisant que l'image en question soit insérée quelques images avant le début de la publicité Pub3 suivant la publicité Pub2 à substituer. De la sorte, le décodage du contenu diffusé est effectif dès le début de la publicité Pub3.

### Instant t4

Un quatrième message de notification d'événement 230 est inséré à l'instant t4 par le multiplexeur MPEG/DVB 100g dans le flux de données. Plus particulièrement, l'instant t4 auquel le quatrième message de notification d'événement 230 est inséré dans le flux correspond sensiblement au début de la publicité Pub3 suivant la publicité Pub2 à substituer de la même manière que le premier message de notification d'événement 230 est inséré dans le flux sensiblement au début de la séquence inter publicités précédant la publicité Pub2 à substituer comme discuté ci-dessus en relation avec l'instant t1 (i.e. avec une certaine tolérance par rapport du début de la séquence en question).

Le quatrième message de notification d'événement 230 encapsule entre autres une information d'identification 2120b31 identifiant l'événement : « fin d'inter publicités après la publicité pub2 ». Ainsi, après une latence d'exécution uniquement liée à des contraintes d'implémentations matérielle dans le terminal à compter de la réception du quatrième message de notification d'événement 230, le terminal 110 exécute immédiatement un jeu d'actions défini pour cet événement par l'application HbbTV. En d'autres termes, le terminal exécute le jeu d'actions sans connaissance d'une information temporelle indicative d'un instant d'exécution, par le terminal, du jeu d'actions en question. Par exemple, le terminal 110 : masque l'image d'inter publicités ce qui permet l'affichage du flux diffusé. La substitution de la publicité Pub2 est alors terminée.

Dans le cas où deux publicités successives sont à substituer toutes les deux, l'événement « début d'inter publicité » pour la deuxième publicité à substituer, et l'événement « fin de publicité » pour la première publicité à substituer peuvent être notifiés au terminal 110 via un seul et même message de notification d'événement 230. Il en va de même pour l'événement « fin d'inter publicités » pour la première publicité à substituer, et l'événement « début de publicité » pour la deuxième publicité à substituer. En d'autres termes, reconsidérant la configuration illustrée sur la figure 5 mais maintenant dans le cas où à la fois Pub2 et Pub 3 sont à substituer, les actions décrites ci-dessus en relation avec t1 sont également mises en œuvre à l'instant t3 (en plus des actions déjà décrites ci-dessus en relation avec t3) afin de préparer la substitution de Pub3. De même, les actions décrites ci-dessus en relation avec t2 sont également mise en œuvre à l'instant t4 (en plus des actions déjà décrites ci-dessus en relation avec t4) afin de réaliser effectivement la substitution de Pub3.

Dans une variante non illustrée sur la figure 5, le décodeur vidéo du terminal 110 notifie l'application HbbTV, via un événement E1, que le décodage de la publicité ciblée initié suite à la réception du premier message de notification d'événement 230 est maintenant effectif, i.e. que la publicité ciblée est maintenant disponible pour affichage par le terminal 110. Dans ce cas, si l'application HbbTV est notifiée de l'évènement E1 avant de recevoir le deuxième message de notification d'événement 230 précité, l'application HbbTV masque l'image d'inter publicités et affiche la publicité ciblée sans attendre la réception du deuxième message de notification d'événement 230. De la sorte, vu de l'utilisateur du terminal 110, la séquence inter publicités précédant la publicité Pub2 à substituer sera plus courte que dans le cas décrit ci-dessus en relation avec la figure 5, maximisant par là-même le temps disponible pour la publicité de substitution.

De même, dans certaines variantes le décodeur vidéo du terminal 110 notifie l'application HbbTV, via un événement E2, que le décodage de la publicité ciblée initié suite à la réception du premier message de notification d'événement 230 est maintenant terminé. Dans ce cas, si l'application HbbTV est notifiée de l'évènement E2 avant de recevoir le troisième message de notification d'événement 230 précité, l'application HbbTV en question affiche sur l'écran du terminal 110 l'image d'inter publicités sans attendre la réception du troisième message de notification d'événement 230. De la sorte, vu de l'utilisateur du terminal 110, la séquence inter publicités précédant la publicité Pub3 sera plus long. Ceci permet par exemple de limiter le risque d'empiéter sur le début de la publicité Pub3 lors du retour vers le décodage du flux de données. Par ailleurs, le risque d'une absence de restitution à l'utilisateur (e.g. un écran noir) à la fin de la restitution de la publicité ciblée est ainsi évité.

Alternativement, l'application HbbTV peut ne pas tenir compte de l'évènement E1 ou de l'évènement E2. Dans ce cas, l'application HbbTV affiche la publicité ciblée en lieu et place de Pub2 à réception du deuxième message de notification d'événement 230 ou affiche sur l'écran du terminal 110 l'image d'inter publicités à réception du troisième message de notification d'événement 230 comme décrit ci-dessus en relation avec la figure 5.

Dans le cas où l'application HbbTV ne tient compte ni de l'évènement E1, ni de l'évènement E2, l'application HbbTV se comporte comme décrit ci-dessus en relation avec la figure 5.La **figure 6** présente un exemple de structure du système 100 de diffusion télévisuelle, permettant la mise en œuvre du procédé de la figure 3. Le système 100 comprend une mémoire vive 603 (par exemple une mémoire RAM), une unité de traitement 602 équipée par exemple d'un processeur, et pilotée par un programme d'ordinateur stocké dans une mémoire morte 601 (par exemple une mémoire ROM ou un disque dur). A l'initialisation, les instructions de code du programme d'ordinateur sont par exemple chargées dans la mémoire vive 603 avant d'être exécutées par le processeur de l'unité de traitement 602.

Cette figure 6 illustre seulement une manière particulière, parmi plusieurs possibles, de réaliser le système 100, afin qu'il effectue certaines étapes du procédé détaillé ci-dessus, en relation avec la figure 3 (dans l'un quelconque des différents modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel). Dans le cas où le système 100 est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Dans certains modes de réalisations, les entités 100a à 100h composant le système 100 de la figure 1 sont réalisées sous forme de composantes matérielles en tout ou partie distinctes. Dans ce cas, les composantes matérielles en question comprennent toutes des moyens équivalents à ceux décrits ci-dessus en relation avec la figure 6.

La **figure 7** présente un exemple de structure du terminal 110, permettant la mise en œuvre du procédé de la figure 4. Le terminal 110 comprend une mémoire vive 703 (par exemple une mémoire RAM), une unité de traitement 702 équipée par exemple d'un processeur, et pilotée par un programme d'ordinateur stocké dans une mémoire morte 701 (par exemple une mémoire ROM ou un disque dur). A l'initialisation, les instructions de code du programme d'ordinateur sont par exemple chargées dans la mémoire vive 703 avant d'être exécutées par le processeur de l'unité de traitement 702.

Cette figure 7 illustre seulement une manière particulière, parmi plusieurs possibles, de réaliser les moyens compris dans le terminal 110, afin qu'il effectue certaines étapes du procédé détaillé ci-dessus, en relation avec la figure 4 (dans l'un quelconque des différents modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel). Dans le cas où les moyens compris dans le terminal 110 sont réalisés avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. Procédé de signalisation, à un terminal (110), de la substitution d'un contenu diffusé via un réseau de diffusion (120) auquel est connecté ledit terminal par un contenu de substitution ciblé au moins pour ledit terminal, **caractérisé en ce qu'**il comprend :
• **une obtention** (E300) d'au moins un paquet d'informations de substitution (210, 220) comprenant une information temporelle indicative d'un instant d'exécution par ledit terminal d'au moins une action pour la substitution du contenu diffusé par le contenu de substitution ;
• **une génération** (E310) d'au moins un message de notification d'événement (230) induisant par ledit terminal une exécution de ladite au moins une action, ladite exécution étant déclenchée immédiatement à réception dudit au moins un message de notification d'événement par ledit terminal et après une latence d'exécution uniquement liée à des contraintes d'implémentations matérielle dans le terminal; et
• **une insertion** (E320), dans un flux de données véhiculant ledit contenu diffusé au sein dudit réseau de diffusion, dudit au moins un message de notification d'événement à un emplacement temporel fonction de ladite information temporelle.

2. Procédé selon la revendication 1 dans lequel ledit au moins un paquet d'informations de substitution (210, 220) comprend au moins une information d'identification (2120b31), ladite au moins une action étant fonction de ladite au moins une information d'identification,
et dans lequel ladite génération comprend une **encapsulation** (E310a) de ladite au moins une information d'identification dans ledit au moins un message de notification d'événement.

3. Procédé selon la revendication 1 dans lequel ledit au moins un paquet d'informations de substitution (210, 220) comprend une unique information d'identification pouvant prendre plusieurs valeurs associées chacune, dans le terminal, à un jeu distinct d'au moins une action,
et dans lequel ladite génération comprend une **encapsulation** (E310a) de ladite unique information d'identification dans ledit au moins un message de notification d'événement.

4. Procédé selon l'une quelconque des revendications 1 à 3, dans lequel ledit au moins un paquet d'informations de substitution comprend en outre :
• une première information (2120b1) permettant d'identifier une composante de flux élémentaire dudit flux de données ;
• une deuxième information (2120b2) permettant d'identifier un flux d'événements dans ladite composante de flux élémentaire, ledit au moins un message de notification d'événement étant compris dans ledit flux d'événements ; et
• une information de filtrage (2120b32) ;
lesdites première et deuxième informations et ladite information de filtrage étant transmises au moins audit terminal ;
et dans lequel ladite insertion est fonction de ladite première information,
et dans lequel l'étape de génération comprend une **encapsulation** (E310b) de ladite information de filtrage et de ladite deuxième information dans ledit au moins un message de notification d'événement.

5. Procédé selon l'une quelconque des revendications 1 à 4, comprenant en outre :
• **une autre insertion** (E330), dans ledit flux de données, d'au moins une image permettant d'initier un décodage, par ledit terminal, dudit flux de données,
et dans lequel un écart temporel, dans ledit flux de données, entre ladite au moins une image et ledit au moins un message de notification d'événement est supérieur à une latence d'exécution de l'action identifiée après réception dudit au moins un message de notification d'événement.

6. Procédé selon la revendication 5, dans lequel ledit au moins un paquet d'informations de substitution comprend également :
• des informations d'insertion (2120b4) indiquant si ladite autre insertion doit être effectuée ; et
• une autre information temporelle indiquant un emplacement temporel d'insertion de ladite au moins une image dans ledit flux de données lorsque lesdites informations d'insertion indiquent que ladite autre insertion doit être effectuée.

7. Procédé selon l'une quelconque des revendications 1 à 6, dans lequel ledit au moins un paquet d'informations de substitution suit un protocole SCTE, pour « Society of Cable Telecommunications Engineers » en anglais, 35 ou 104.

8. Procédé selon l'une quelconque des revendications 1 à 7, dans lequel ladite étape d'insertion est mise en œuvre au moins deux fois de sorte que :
• un premier message de notification d'événement est inséré à un premier instant (t1) dans ledit flux de données véhiculant ledit contenu diffusé au sein dudit réseau de diffusion, ledit premier instant correspondant sensiblement à un début d'une première inter-séquence précédant ledit contenu diffusé à substituer, ledit premier message de notification d'événement induisant au moins une restitution d'un premier élément d'attente par ledit terminal, ladite restitution dudit premier élément d'attente étant déclenchée immédiatement à réception dudit premier message de notification d'événement par ledit terminal et après une latence d'exécution uniquement liée à des contraintes d'implémentations matérielle dans le terminal ; et
• un deuxième message de notification d'événement est inséré à un deuxième instant (t2) dans ledit flux de données véhiculant ledit contenu diffusé au sein dudit réseau de diffusion, ledit deuxième instant correspondant sensiblement à un début dudit contenu diffusé à substituer, ledit deuxième message de notification d'événement induisant au moins un masquage dudit premier élément d'attente par ledit terminal, ledit masquage dudit premier élément d'attente étant déclenché immédiatement à réception dudit deuxième message de notification d'événement par ledit terminal et après une latence d'exécution uniquement liée à des contraintes d'implémentations matérielle dans le terminal.

9. Procédé selon la revendication 8, dans lequel ladite étape d'insertion est mise en oeuvre au moins deux autres fois de sorte que :
• un troisième message de notification d'événement est inséré à un troisième instant (t3) dans ledit flux de données véhiculant ledit contenu diffusé au sein dudit réseau de diffusion, ledit troisième instant correspondant sensiblement à un début d'une deuxième inter-séquence suivant ledit contenu diffusé à substituer, ledit troisième message de notification d'événement induisant au moins une restitution d'un deuxième élément d'attente par ledit terminal, ladite restitution dudit deuxième élément d'attente étant déclenchée immédiatement à réception dudit troisième message de notification d'événement par ledit terminal et après une latence d'exécution uniquement liée à des contraintes d'implémentations matérielle dans le terminal ; et
• un quatrième message de notification d'événement est inséré à un quatrième instant (t4) dans ledit flux de données véhiculant ledit contenu diffusé au sein dudit réseau de diffusion, ledit quatrième instant correspondant sensiblement à un début d'un autre contenu diffusé suivant ladite deuxième inter-séquence, ledit quatrième message de notification d'événement induisant au moins un masquage dudit deuxième élément d'attente par ledit terminal, ledit masquage dudit deuxième élément d'attente étant déclenché immédiatement à réception dudit quatrième message de notification d'événement par ledit terminal et après une latence d'exécution uniquement liée à des contraintes d'implémentations matérielle dans le terminal .

10. Procédé selon la revendication 9, dans lequel au moins une autre image permettant d'initier un décodage, par ledit terminal, dudit autre contenu diffusé est insérée dans ledit flux de données,
dans lequel ledit troisième message de notification d'événement déclenche en outre une action induisant un décodage dudit autre contenu diffusé,
et dans lequel un écart temporel, dans ledit flux de données, entre ladite au moins une autre image et ledit troisième message de notification d'événement est supérieur à une latence d'exécution de ladite action induisant le décodage dudit autre contenu diffusé par ledit terminal.

11. Procédé de substitution, par un terminal (110), d'un contenu diffusé via un réseau de diffusion (120) auquel est connecté ledit terminal par un contenu de substitution ciblé au moins pour ledit terminal, **caractérisé en ce que** ledit terminal effectue :
• **une réception** (E420) d'au moins un message de notification d'événement (430) inséré dans un flux de données véhiculant ledit contenu diffusé au sein dudit réseau de diffusion ; et
• **une exécution** (E430) d'au moins une action pour la substitution du contenu diffusé par le contenu de substitution, ladite exécution étant déclenchée immédiatement à réception dudit au moins un message de notification d'événement par ledit terminal et effectuée après une latence d'exécution uniquement liée à des contraintes d'implémentations matérielle dans le terminal.

12. Procédé selon la revendication 11 dans lequel ladite exécution comprend une **obtention** (E430a) d'au moins une information d'identification (2120b31) encapsulée dans ledit au moins un message de notification d'événement,
et dans lequel ladite au moins une action est fonction de ladite au moins une information d'identification obtenue.

13. Procédé selon la revendication 11 dans lequel ladite exécution comprend une **obtention** (E430a) d'une unique information d'identification pouvant prendre plusieurs valeurs associées chacune, dans le terminal, à un jeu distinct d'au moins une action,
et dans lequel ladite au moins une action est fonction de ladite unique information d'identification obtenue.

14. Procédé selon l'une quelconque des revendications 11 à 13, dans lequel ledit terminal effectue en outre **une autre réception** (E410), via un réseau large bande (130) auquel est connecté ledit terminal, de :
• une première information (2120b1) permettant d'identifier une composante de flux élémentaire dudit flux de données ;
• une deuxième information (2120b2) permettant d'identifier un flux d'événements dans ladite composante de flux élémentaire, ledit au moins un message de notification d'événement étant inséré dans ledit flux d'événements ; et
• une information de filtrage (2120b32), ledit au moins un message de notification d'événement encapsulant en outre ladite information de filtrage ;
et dans lequel la réception dudit au moins un message de notification d'événement est fonction des première et deuxième informations, pour identifier un flux d'événements dans ladite composante de flux élémentaire, et de l'information de filtrage, pour identifier ledit au moins un message de notification d'événement au sein du flux d'événements identifié.

15. Procédé selon l'une quelconque des revendications 11 à 14, dans lequel ledit terminal effectue en outre **une réception** (E400) dudit contenu ciblé via ledit réseau de diffusion ou via ledit réseau large bande auquel est connecté ledit terminal.

16. Procédé selon l'une quelconque des revendications 11 à 15, dans lequel ladite étape d'exécution est mise en œuvre au moins deux fois de sorte que :
• une restitution d'un premier élément d'attente est exécutée par ledit terminal, ladite restitution dudit premier élément d'attente étant déclenchée immédiatement à réception dudit premier message de notification d'événement par ledit terminal et après une latence d'exécution uniquement liée à des contraintes d'implémentations matérielle dans le terminal, ledit premier message de notification d'événement étant inséré à un premier instant (t1) dans ledit flux de données véhiculant ledit contenu diffusé au sein dudit réseau de diffusion, ledit premier instant correspondant sensiblement à un début d'une première inter-séquence précédant ledit contenu diffusé à substituer ; et
• un masquage dudit premier élément d'attente est exécuté par ledit terminal, ledit masquage dudit premier élément d'attente étant déclenché immédiatement à réception dudit deuxième message de notification d'événement par ledit terminal et après une latence d'exécution uniquement liée à des contraintes d'implémentations matérielle dans le terminal, ledit deuxième message de notification d'événement étant inséré à un deuxième instant (t2) dans ledit flux de données véhiculant ledit contenu diffusé au sein dudit réseau de diffusion, ledit deuxième instant correspondant sensiblement à un début dudit contenu diffusé à substituer.

17. Procédé selon la revendication 16 dans lequel ledit premier message de notification d'événement déclenche en outre une action induisant un décodage dudit contenu de substitution par un décodeur dudit terminal, ledit décodeur générant un premier événement lorsque ledit contenu de substitution est disponible pour restitution,
et dans lequel, lorsque ledit premier événement est généré avant réception dudit deuxième message de notification d'événement par ledit terminal, ledit terminal exécute ledit masquage dudit premier élément d'attente et restitue ledit contenu de substitution dès que ledit décodeur a généré ledit premier événement.

18. Procédé selon la revendication 16 ou 17, dans lequel ladite étape d'exécution est mise en œuvre au moins deux autres fois de sorte que :
• une restitution d'un deuxième élément d'attente est exécutée par ledit terminal, ladite restitution dudit deuxième élément d'attente étant déclenchée immédiatement à réception d'un troisième message de notification d'événement par ledit terminal et après une latence d'exécution uniquement liée à des contraintes d'implémentations matérielle dans le terminal, ledit troisième message de notification d'événement étant inséré à un troisième instant (t3) dans ledit flux de données véhiculant ledit contenu diffusé au sein dudit réseau de diffusion, ledit troisième instant correspondant sensiblement à un début d'une deuxième inter-séquence suivant ledit contenu diffusé à substituer ; et
• un masquage dudit deuxième élément d'attente est exécuté par ledit terminal, ledit masquage dudit deuxième élément d'attente étant déclenché immédiatement à réception d'un quatrième message de notification d'événement par ledit terminal et après une latence d'exécution uniquement liée à des contraintes d'implémentations matérielle dans le terminal, ledit quatrième message de notification d'événement étant inséré à un quatrième instant (t4) dans ledit flux de données véhiculant ledit contenu diffusé au sein dudit réseau de diffusion, ledit quatrième instant correspondant sensiblement à un début d'un autre contenu diffusé suivant ladite deuxième inter-séquence.

19. Procédé selon la revendication 18 dans lequel ledit décodeur génère un deuxième événement lorsque le décodage dudit contenu de substitution est terminé,
et dans lequel, lorsque ledit deuxième événement est généré avant réception dudit troisième message de notification d'événement par ledit terminal, ledit terminal exécute ladite restitution dudit deuxième élément d'attente dès que ledit décodeur a généré ledit deuxième événement.

20. Procédé selon l'une quelconque des revendications 4 à 10 en ce qu'elle dépend de la 4, ou selon l'une quelconque des revendications 14 à 19 en ce qu'elle dépend de la 14, dans lequel ladite information de filtrage (2120b32) est un identifiant (2120b33) dudit contenu diffusé.

21. Procédé selon l'une quelconque des revendications 1 à 20, dans lequel ladite au moins une action définie via ladite première information de substitution encapsulée appartient au groupe comprenant :
• une préparation à une substitution ;
• un décodage dudit contenu ciblé ;
• une restitution du contenu ciblé sous une forme décodée ;
• une reprise du décodage dudit contenu diffusé ; et
• une restitution d'un élément d'attente.

22. Procédé selon l'une quelconque des revendications 1 à 21, dans lequel ladite exécution par le terminal de ladite au moins une action est effectuée avec une latence d'exécution effective prédéterminée, différente d'une latence intrinsèque dudit terminal et commune avec au moins un autre terminal pour lequel est également ciblé ledit contenu de substitution.

23. Procédé selon l'une quelconque des revendications 1 à 22, dans lequel le terminal est un terminal hybride supportant le standard HbbTV, pour « Hybrid Broadcast Broadband TV » en anglais.

24. Procédé selon l'une quelconque des revendications 1 à 23, dans lequel ledit flux de données est au format MPEG-TS, pour « Moving Picture Experts Group - Transport Stream » en anglais, et dans lequel au moins un message de notification d'événement est un « stream event » au format DSM-CC, pour « Digital Storage Media Command and Control» en anglais.

25. Produit programme d'ordinateur comprenant des instructions de code de programme pour la mise en œuvre d'un procédé selon l'une quelconque des revendications 1 à 23, lorsque ledit programme est exécuté sur un ordinateur.

26. Système (100) de diffusion configuré pour signaler, à un terminal (110), la substitution d'un contenu diffusé via un réseau de diffusion (120) auquel est connecté ledit terminal par un contenu de substitution ciblé au moins pour ledit terminal, **caractérisé en ce qu'**il comprend :
• **des moyens d'obtention** (602) d'au moins un paquet d'informations de substitution (210, 220) comprenant une information temporelle indicative d'un instant d'exécution par ledit terminal d'au moins une action pour la substitution du contenu diffusé par le contenu de substitution ;
• **des moyens de génération** (602) d'au moins un message de notification d'événement (230) induisant par ledit terminal une exécution de ladite au moins une action, ladite exécution étant déclenchée immédiatement à réception dudit au moins un message de notification d'événement par ledit terminal et après une latence d'exécution uniquement liée à des contraintes d'implémentations matérielle dans le terminal; et
• **des moyens d'insertion** (602), dans un flux de données véhiculant ledit contenu diffusé au sein dudit réseau de diffusion, dudit au moins un message de notification d'événement à un emplacement temporel fonction de ladite information temporelle.

27. Terminal (110) configuré pour substituer un contenu diffusé via un réseau de diffusion (120) auquel est connecté ledit terminal par un contenu de substitution ciblé au moins pour ledit terminal, **caractérisé en ce qu'**il comprend :
• **des moyens de réception** (702) d'au moins un message de notification d'événement (430) inséré dans un flux de données véhiculant ledit contenu diffusé au sein dudit réseau de diffusion ; et
• **des moyens d'exécution** (702) d'au moins une action pour la substitution du contenu diffusé par le contenu de substitution, ladite exécution étant déclenchée immédiatement à réception dudit au moins un message de notification d'événement par ledit terminal et après une latence d'exécution uniquement liée à des contraintes d'implémentations matérielle dans le terminal.

## Patentansprüche

1. Verfahren zur Signalisierung, an ein Endgerät (110), eines Ersatzes eines Inhalts, der über ein Sendenetz (120) gesendet wird, mit dem das genannte Endgerät verbunden ist, durch einen Ersatzinhalt, der mindestens für das genannte Endgerät zielgerichtet ist, **dadurch gekennzeichnet, dass** es umfasst:
- Erhalten (E300) mindestens eines Ersatzinformationspakets (210, 220), umfassend eine Zeitinformation, die einen Moment der Ausführung, durch das genannte Endgerät, mindestens einer Aktion für den Ersatz des gesendeten Inhalts durch den Ersatzinhalt anzeigt;
- Generieren (E310) mindestens einer Nachricht (230) zur Meldung eines Ereignisses, welche eine Ausführung der genannten mindestens einen Aktion durch das genannte Endgerät induziert, wobei die genannte Ausführung unmittelbar beim Empfang der genannten mindestens einen Nachricht zur Meldung eines Ereignisses durch das genannte Endgerät und nach einer Ausführungslatenz ausgelöst wird, die nur mit den Hardware-Implementierungseinschränkungen in dem Endgerät verbunden ist; und
- Einfügen (E320), in einen Datenstrom, welcher den genannten Inhalt befördert, der in dem genannten Sendenetz gesendet wird, der genannten mindestens einen Nachricht zur Meldung eines Ereignisses in einen Zeitschlitz in Abhängigkeit von der genannten Zeitinformation.

2. Verfahren nach Anspruch 1, wobei das genannte mindestens eine Ersatzinformationspaket (210, 220) mindestens eine Identifikationsinformation (2120b31) umfasst, wobei die genannte mindestens eine Aktion von der genannten mindestens einen Identifikationsinformation abhängig ist,
und wobei das genannte Generieren eine Einkapselung (E310a) der genannten mindestens einen Identifikationsinformation in der genannten mindestens einen Nachricht zur Meldung eines Ereignisses umfasst.

3. Verfahren nach Anspruch 1, wobei das genannte mindestens eine Ersatzinformationspaket (210, 220) eine einzige Identifikationsinformation umfasst, welche mehrere Werte annehmen kann, die jeweils, in dem Endgerät, mit einem bestimmten Satz mindestens einer Aktion assoziiert sind,
und wobei das genannte Generieren eine Einkapselung (E310a) der genannten einzigen Identifikationsinformation in der genannten mindestens einen Nachricht zur Meldung eines Ereignisses umfasst.

4. Verfahren nach einem der Ansprüche 1 bis 3, wobei das genannte mindestens eine Ersatzinformationspaket ferner umfasst:
- eine erste Information (2120b1), die es gestattet, eine Komponente des elementaren Stroms des genannten Datenstroms zu identifizieren;
- eine zweite Information (2120b2), die es gestattet, einen Ereignisstrom in der genannten Komponente des elementaren Stroms zu identifizieren, wobei die genannte mindestens eine Nachricht zur Meldung eines Ereignisses in dem genannten Ereignisstrom enthalten ist; und
- eine Filterinformation (2120b32);
wobei die genannte erste und zweite Information und die genannte Filterinformation mindestens an das genannte Endgerät übertragen werden;
und wobei das genannte Einsetzen von der genannten ersten Information abhängig ist,
und wobei der Schritt des Generierens eine Einkapselung (E310b) der genannten Filterinformation und der genannten zweiten Information in der genannten mindestens einen Nachricht zur Meldung eines Ereignisses umfasst.

5. Verfahren nach einem der Ansprüche 1 bis 4, ferner umfassend:
- ein anderes Einsetzen (E330), in den genannten Datenstrom, mindestens eines Bilds, das es gestattet, ein Decodieren, durch das genannte Endgerät, des genannten Datenstroms zu initiieren,
und wobei ein Zeitabstand, in dem genannten Datenstrom, zwischen dem genannten mindestens einen Bild und der genannten mindestens einen Nachricht zur Meldung eines Ereignisses größer ist als eine Ausführungslatenz der identifizierten Aktion nach dem Empfang der genannten mindestens einen Nachricht zur Meldung eines Ereignisses.

6. Verfahren nach Anspruch 5, wobei das genannte mindestens eine Ersatzinformationspaket auch umfasst:
- Einsetzinformationen (2120b4), die anzeigen, ob das genannte andere Einsetzen vorgenommen werden muss; und
- eine andere Zeitinformation, die einen Zeitschlitz zum Einsetzen des genannten mindestens einen Bilds in den genannten Datenstrom anzeigt, wenn die genannten Einsetzinformationen anzeigen, dass das genannte andere Einsetzen vorgenommen werden muss.

7. Verfahren nach einem der Ansprüche 1 bis 6, wobei das genannte mindestens eine Ersatzinformationspaket einem SCTE, für "Society of Cable Telecommunications Engineers" in Englisch, Protokoll 35 oder 104 folgt.

8. Verfahren nach einem der Ansprüche 1 bis 7, wobei der genannte Einsetzschritt mindestens zweimal derart durchgeführt wird, dass:
- eine erste Nachricht zur Meldung eines Ereignisses in einem ersten Moment (t1) in den genannten Datenstrom eingesetzt wird, welcher den genannten Inhalt befördert, der in dem genannten Sendenetz gesendet wird, wobei der genannte erste Moment im Wesentlichen einem Beginn einer ersten Intersequenz entspricht, die dem zu ersetzenden gesendeten Inhalt vorausgeht, wobei die genannte erste Nachricht zur Meldung eines Ereignisses mindestens eine Wiederherstellung eines ersten Warteelements durch das genannte Endgerät induziert, wobei die Wiederherstellung des genannten ersten Warteelements durch das genannte Endgerät induziert, wobei die genannte Wiederherstellung des genannten ersten Warteelements unmittelbar beim Empfang der genannten ersten Nachricht zur Meldung eines Ereignisses durch das genannte Endgerät und nach einer Ausführungslatenz ausgelöst wird, die nur mit den Hardware-Implementierungseinschränkungen in dem Endgerät verbunden ist; und
- eine zweite Nachricht zur Meldung eines Ereignisses in einem zweiten Moment (t2) in den genannten Datenstrom eingesetzt wird, welcher den genannten Inhalt befördert, der in dem genannten Sendenetz gesendet wird, wobei der genannte zweite Moment im Wesentlichen einem Beginn des genannten zu ersetzenden gesendeten Inhalts entspricht, wobei die genannte zweite Nachricht zur Meldung eines Ereignisses mindestens eine Maskierung des genannten ersten Warteelements durch das genannte Endgerät induziert, wobei die genannte Maskierung des genannten ersten Warteelements unmittelbar beim Empfang der genannten zweiten Nachricht zur Meldung eines Ereignisses durch das genannte Endgerät und nach einer Ausführungslatenz ausgelöst wird, die nur mit den Hardware-Implementierungseinschränkungen in dem Endgerät verbunden ist.

9. Verfahren nach Anspruch 8, wobei der genannte Einsetzschritt mindestens zwei andere Male derart durchgeführt wird, dass:
- eine dritte Nachricht zur Meldung eines Ereignisses in einem dritten Moment (t3) in den genannten Datenstrom eingesetzt wird, welcher den genannten Inhalt befördert, der in dem genannten Sendenetz gesendet wird, wobei der genannte dritte Moment im Wesentlichen einem Beginn einer zweiten Intersequenz entspricht, die dem zu ersetzenden gesendeten Inhalt folgt, wobei die genannte dritte Nachricht zur Meldung eines Ereignisses mindestens eine Wiederherstellung eines zweiten Warteelements durch das genannte Endgerät induziert, wobei die genannte Wiederherstellung des genannten zweiten Warteelements unmittelbar beim Empfang der genannten dritten Nachricht zur Meldung eines Ereignisses durch das genannte Endgerät und nach einer Ausführungslatenz ausgelöst wird, die nur mit den Hardware-Implementierungseinschränkungen in dem Endgerät verbunden ist; und
- eine vierte Nachricht zur Meldung eines Ereignisses in einem vierten Moment (t4) in den genannten Datenstrom eingesetzt wird, welcher den genannten Inhalt befördert, der in dem genannten Sendenetz gesendet wird, wobei der genannte vierte Moment im Wesentlichen einem Beginn eines anderen gesendeten Inhalts entspricht, welcher der zweiten Intersequenz folgt, wobei die genannte vierte Nachricht zur Meldung eines Ereignisses mindestens eine Maskierung des genannten zweiten Warteelements durch das genannte Endgerät induziert, wobei die genannte Maskierung des genannten zweiten Warteelements unmittelbar beim Empfang der genannten vierten Nachricht zur Meldung eines Ereignisses durch das genannte Endgerät und nach einer Ausführungslatenz ausgelöst wird, die nur mit den Hardware-Implementierungseinschränkungen in dem Endgerät verbunden ist.

10. Verfahren nach Anspruch 9, wobei mindestens ein anderes Bild, das es gestattet, ein Decodieren, durch das genannte Endgerät, des genannten anderen gesendeten Inhalts zu initiieren, in den genannten Datenstrom eingesetzt wird,
wobei die genannte dritte Nachricht zur Meldung eines Ereignisses ferner eine Aktion auslöst, die ein Decodieren des genannten anderen gesendeten Inhalts induziert,
und wobei ein Zeitabstand, in dem genannten Datenstrom, zwischen dem mindestens einen anderen Bild und der genannten dritten Nachricht zur Meldung eines Ereignisses größer ist als eine Ausführungslatenz der genannten Aktion, die das Decodieren des genannten anderen gesendeten Inhalts durch das genannte Endgerät induziert.

11. Verfahren zum Ersetzen, durch ein Endgerät (110), eines Inhalts, der über ein Sendenetz (120) gesendet wird, mit dem das genannte Endgerät verbunden ist, durch einen Ersatzinhalt, der mindestens für das genannte Endgerät zielgerichtet ist, **dadurch gekennzeichnet, dass** das genannte Endgerät vornimmt:
- Empfangen (E420) mindestens einer Nachricht (430) zur Meldung eines Ereignisses, die in einen Datenstrom eingesetzt ist, welcher den genannten Inhalt befördert, der in dem genannten Sendenetz gesendet wird; und
- Ausführen (E430) mindestens einer Aktion für den Ersatz des gesendeten Inhalts durch den Ersatzinhalt, wobei die genannte Ausführung unmittelbar beim Empfang der genannten mindestens einen Nachricht zur Meldung eines Ereignisses durch das genannte Endgerät ausgelöst wird und nach einer Ausführungslatenz vorgenommen wird, die nur mit den Hardware-Implementierungseinschränkungen in dem Endgerät verbunden ist.

12. Verfahren nach Anspruch 11, wobei das genannte Ausführen ein Erhalten (E430a) mindestens einer Identifikationsinformation (2120b31) umfasst, die in der genannten mindestens einen Nachricht zur Meldung eines Ereignisses eingekapselt ist,
und wobei die genannte mindestens eine Aktion von der genannten mindestens einen erhaltenen Identifikationsinformation abhängig ist.

13. Verfahren nach Anspruch 11, wobei das genannte Ausführen ein Erhalten (E430a) einer einzigen Identifikationsinformation umfasst, welche mehrere Werte annehmen kann, die jeweils, in dem Endgerät, mit einem bestimmten Satz mindestens einer Aktion assoziiert sind,
und wobei die genannte mindestens eine Aktion von der genannten einzigen erhaltenen Identifikationsinformation abhängig ist.

14. Verfahren nach einem der Ansprüche 11 bis 13, wobei das genannte Endgerät ferner ein anderes Empfangen (E410), über ein Breitbandnetz (130), mit dem das genannte Endgerät verbunden ist, vornimmt von:
- einer ersten Information (2120b1), die es gestattet, eine Komponente des elementaren Stroms des genannten Datenstroms zu identifizieren;
- einer zweiten Information (2120b2), die es gestattet, einen Ereignisstrom in der genannten Komponente des elementaren Stroms zu identifizieren, wobei die genannte mindestens eine Nachricht zur Meldung eines Ereignisses in dem genannten Ereignisstrom eingesetzt ist; und
- einer Filterinformation (2120b32), wobei die genannte mindestens eine Nachricht zur Meldung eines Ereignisses ferner die genannte Filterinformation einkapselt;
und wobei das Empfangen der genannten mindestens einen Nachricht zur Meldung eines Ereignisses abhängig ist von der ersten und zweiten Information, um einen Ereignisstrom in der genannten Komponente des elementaren Stroms zu identifizieren, und von der Filterinformation, um die genannte mindestens eine Nachricht zur Meldung eines Ereignisses in dem identifizierten Ereignisstrom zu identifizieren.

15. Verfahren nach einem der Ansprüche 11 bis 14, wobei das genannte Endgerät ferner ein Empfangen (E400) des genannten zielgerichteten Inhalts über das genannte Sendenetz oder über das genannte Breitbandnetz vornimmt, mit dem das genannte Endgerät verbunden ist.

16. Verfahren nach einem der Ansprüche 11 bis 15, wobei der genannte Ausführungsschritt mindestens zweimal derart durchgeführt wird, dass:
- eine Wiederherstellung eines ersten Warteelements von dem genannten Endgerät ausgeführt wird, wobei die genannte Wiederherstellung des genannten ersten Warteelements unmittelbar beim Empfang der genannten ersten Nachricht zur Meldung eines Ereignisses durch das genannte Endgerät und nach einer Ausführungslatenz ausgelöst wird, die nur mit den Hardware-Implementierungseinschränkungen in dem Endgerät verbunden ist, wobei die genannte erste Nachricht zur Meldung eines Ereignisses in einem ersten Moment (t1) in den genannten Datenstrom eingesetzt wird, welcher den genannten Inhalt befördert, der in dem genannten Sendenetz gesendet wird, wobei der genannte erste Moment im Wesentlichen einem Beginn einer ersten Intersequenz entspricht, die dem genannten zu ersetzenden gesendeten Inhalt vorausgeht; und
- eine Maskierung des genannten ersten Warteelements von dem genannten Endgerät ausgeführt wird, wobei die genannte Maskierung des genannten ersten Warteelements unmittelbar beim Empfang der genannten zweiten Nachricht zur Meldung eines Ereignisses durch das Endgerät und nach einer Ausführungslatenz ausgelöst wird, die nur mit den Hardware-Implementierungseinschränkungen in dem Endgerät verbunden ist, wobei die genannte zweite Nachricht zur Meldung eines Ereignisses in einem zweiten Moment (t2) in den genannten Datenstrom eingesetzt wird, welcher den genannten Inhalt befördert, der in dem genannten Sendenetz gesendet wird, wobei der genannte zweite Moment im Wesentlichen einem Beginn des genannten zu ersetzenden gesendeten Inhalts entspricht.

17. Verfahren nach Anspruch 16, wobei die genannte erste Nachricht zur Meldung eines Ereignisses ferner eine Aktion auslöst, die ein Decodieren des genannten Ersatzinhalts durch einen Decodierer des genannten Endgeräts induziert, wobei der genannte Decodierer ein erstes Ereignis generiert, wenn der genannte Ersatzinhalt zur Wiederherstellung verfügbar ist,
und wobei, wenn das genannte erste Ereignis vor dem Empfang der genannten zweiten Nachricht zur Meldung eines Ereignisses durch das genannte Endgerät generiert wird, das genannte Endgerät das genannte Maskieren des genannten ersten Warteelements ausführt und den genannten Ersatzinhalt wiederherstellt, sobald der genannte Decodierer das genannte erste Ereignis generiert hat.

18. Verfahren nach Anspruch 16 oder 17, wobei der genannte Ausführungsschritt mindestens zwei andere Male derart durchgeführt wird, dass:
- eine Wiederherstellung eines zweiten Warteelements von dem genannten Endgerät ausgeführt wird, wobei die genannte Wiederherstellung des genannten zweiten Warteelements unmittelbar beim Empfang einer dritten Nachricht zur Meldung eines Ereignisses von dem genannten Endgerät und nach einer Ausführungslatenz ausgelöst wird, die nur mit den Hardware-Implementierungseinschränkungen in dem Endgerät verbunden ist, wobei die genannte dritte Nachricht zur Meldung eines Ereignisses in einem dritten Moment (t3) in den genannten Datenstrom eingesetzt wird, welcher den genannten Inhalt befördert, der in dem genannten Sendenetz gesendet wird, wobei der genannte dritte Moment im Wesentlichen einem Beginn einer zweiten Intersequenz entspricht, die dem genannten zu ersetzenden gesendeten Inhalt folgt; und
- eine Maskierung des genannten zweiten Wartelements von dem genannten Endgerät ausgeführt wird, wobei die genannte Maskierung des genannten zweiten Wartelements unmittelbar beim Empfang einer vierten Nachricht zur Meldung eines Ereignisses von dem genannten Endgerät und nach einer Ausführungslatenz ausgelöst wird, die nur mit den Hardware-Implementierungseinschränkungen in dem Endgerät verbunden ist, wobei die genannte vierte Nachricht zur Meldung eines Ereignisses in einem vierten Moment (t4) in den genannten Datenstrom eingesetzt wird, welcher den genannten Inhalt befördert, der in dem genannten Sendenetz gesendet wird, wobei der genannte vierte Moment im Wesentlichen einem Beginn eines anderen gesendeten Inhalts entspricht, welcher der genannten zweiten Intersequenz folgt.

19. Verfahren nach Anspruch 18, wobei der genannte Decodierer ein zweites Ereignis generiert, wenn das Decodieren des genannten Ersatzinhalts beendet ist,
und wobei, wenn das genannte zweite Ereignis vor dem Empfang der genannten dritten Nachricht zur Meldung eines Ereignisses von dem genannten Endgerät generiert wird, das genannte Endgerät die genannte Wiederherstellung des genannten zweiten Warteelements ausführt, sobald der genannte Decodierer das genannte zweite Ereignis generiert hat.

20. Verfahren nach einem der Ansprüche 4 bis 10, sofern von 4 abhängig, oder nach einem der Ansprüche 14 bis 19, sofern von 14 abhängig, wobei die genannte Filterinformation (2120b32) ein Identifikator (2120b33) des genannten gesendeten Inhalts ist.

21. Verfahren nach einem der Ansprüche 1 bis 20, wobei die genannte mindestens eine Aktion, die über die genannte erste eingekapselte Ersatzinformation definiert wird, zur Gruppe gehört, umfassend:
- ein Vorbereiten eines Ersetzens;
- ein Decodieren des genannten zielgerichteten Inhalts;
- ein Wiederherstellen des zielgerichteten Inhalts in einer decodierten Form;
- ein Wiederaufnehmen des Decodierens des genannten gesendeten Inhalts; und
- ein Wiederherstellen eines Warteelements.

22. Verfahren nach einem der Ansprüche 1 bis 21, wobei das genannte Ausführen durch das Endgerät der genannten mindestens einen Aktion mit einer vorherbestimmten effektiven Ausführungslatenz vorgenommen wird, die von einer intrinsischen Latenz des genannten Endgeräts verschieden ist und mit mindestens einem anderen Endgerät gemeinsam ist, für das der genannte Ersatzinhalt auch zielgerichtet ist.

23. Verfahren nach einem der Ansprüche 1 bis 22, wobei das Endgerät ein hybrides Endgerät ist, das den Standard HbbTV, für "Hybrid Broadcast Broadband TV" in Englisch, unterstützt.

24. Verfahren nach einem der Ansprüche 1 bis 23, wobei der genannte Datenstrom im Format MPEG-TS, für "Moving Picture Experts Group - Transport Stream" in Englisch, ist, und wobei mindestens eine Nachricht zur Meldung eines Ereignisses ein "stream event" im Format DSM-CC, für "Digital Storage Media Command and Control" in Englisch, ist.

25. Computerprogrammprodukt, umfassend Programmcodeinstruktionen zur Durchführung eines Verfahrens nach einem der Ansprüche 1 bis 23, wenn das genannte Programm auf einem Computer ausgeführt wird.

26. Sendesystem (100), welches dafür ausgelegt ist, um, an ein Endgerät (110), den Ersatz eines Inhalts zu signalisieren, der über ein Sendenetz (120) gesendet wird, mit dem das genannte Endgerät verbunden ist, durch einen Ersatzinhalt, der mindestens für das genannte Endgerät zielgerichtet ist, **dadurch gekennzeichnet, dass** es umfasst:
- Mittel (602) zum Erhalten mindestens eines Ersatzinformationspakets (210, 220), umfassend eine Zeitinformation, die einen Moment der Ausführung, durch das genannte Endgerät, mindestens einer Aktion für den Ersatz des gesendeten Inhalts durch den Ersatzinhalt anzeigt;
- Mittel (602) zum Generieren mindestens einer Nachricht (230) zur Meldung eines Ereignisses, welche die genannte mindestens eine Aktion durch das genannte Endgerät induziert, wobei die genannte Ausführung unmittelbar beim Empfang der genannten mindestens einen Nachricht zur Meldung eines Ereignisses durch das genannte Endgerät und nach einer Ausführungslatenz ausgelöst wird, die nur mit den Hardware-Implementierungseinschränkungen in dem Endgerät verbunden ist; und
- Mittel (602) zum Einfügen in einen Datenstrom, welcher den genannten Inhalt befördert, der in dem genannten Sendenetz gesendet wird, der genannten mindestens einen Nachricht zur Meldung eines Ereignisses in einen Zeitschlitz in Abhängigkeit von der genannten Zeitinformation.

27. Endgerät (110), welches dafür ausgelegt ist, um einen Inhalt, der über ein Sendenetz (120) gesendet wird, mit dem das genannte Endgerät verbunden ist, durch einen Ersatzinhalt zu ersetzen, der mindestens für das genannte Endgerät zielgerichtet ist, **dadurch gekennzeichnet, dass** es umfasst:
- Mittel (702) zum Empfangen mindestens einer Nachricht (430) zur Meldung eines Ereignisses, die in einen Datenstrom eingesetzt ist, welcher den genannten Inhalt befördert, der in dem genannten Sendenetz gesendet wird; und
- Mittel (702) zum Ausführen mindestens einer Aktion für den Ersatz des gesendeten Inhalts durch den Ersatzinhalt, wobei die genannte Ausführung unmittelbar beim Empfang der genannten mindestens einen Nachricht zur Meldung eines Ereignisses durch das genannte Endgerät und nach einer Ausführungslatenz ausgelöst wird, die nur mit den Hardware-Implementierungseinschränkungen in dem Endgerät verbunden ist.

## Claims

1. Method for signalling, to a terminal (110), the substitution of a content which is broadcast via a broadcast network (120) to which the terminal is connected with a substitution content which is targeted at least for the terminal, **characterised in that** it comprises:
• **obtaining** (E300) at least one substitution information packet (210, 220) comprising time information indicating a time of execution by the terminal of at least one action for substituting the broadcast content with the substitution content;
• **generating** (E310) at least one event notification message (230) leading to the terminal executing the at least one action, the execution being initiated immediately upon receipt of the at least one event notification message by the terminal and after an execution latency which is linked only to hardware implementation constraints in the terminal; and
• **inserting** (E320), in a data flow which conveys the broadcast content within the broadcast network, the at least one event notification message at a time slot which is a function of the time information item.

2. Method according to claim 1, wherein the at least one substitution information packet (210, 220) comprises at least one identification information item (2120b31), the at least one action being a function of the at least one identification information item,
and wherein the generation involves an **encapsulation** (E310a) of the at least one identification information item in the at least one event notification message.

3. Method according to claim 1, wherein the at least one substitution information packet (210, 220) comprises a single identification information item which can assume several values which are each associated, in the terminal, with a different set of at least one action,
and wherein the generation comprises an **encapsulation** (E310a) of the single identification information item in the at least one event notification message.

4. Method according to any one of claims 1 to 3, wherein the at least one substitution information item further comprises:
• a first information item (2120b1) which enables an elementary flow component of the data flow to be identified;
• a second information item (2120b2) which enables an event flow in the elementary flow component to be identified, the at least one event notification message being included in the event flow; and
• filtering information (2120b32);
the first and second information items and the filtering information being transmitted at least to the terminal; and wherein the insertion is a function of the first information item,
and wherein the generation step comprises an **encapsulation** (E310b) of the filtering information and the second information item in the at least one event notification message.

5. Method according to any one of claims 1 to 4, further comprising:
• **another insertion** (E330), in the data flow, of at least one image which enables a decoding of the data flow to be initiated by the terminal,
and wherein a time difference in the data flow between the at least one image and the at least one event notification message is greater than an execution latency of the action identified after the at least one event notification message has been received.

6. Method according to claim 5, wherein the at least one substitution information packet also comprises:
• insertion information (2120b4) indicating whether the other insertion has to be carried out; and
• another time information item which indicates a time slot for inserting the at least one image in the data flow when the insertion information items indicate that the other insertion has to be carried out.

7. Method according to any one of claims 1 to 6, wherein the at least one substitution information packet follows an SCTE protocol ("Society of Cable Telecommunications Engineers) 35 or 104.

8. Method according to any one of claims 1 to 7, wherein the insertion step is implemented at least twice so that:
• a first event notification message is inserted at a first time (t1) in the data flow which conveys the content broadcast within the broadcast network, the first time substantially corresponding to a beginning of a first inter-sequence which precedes the broadcast content to be substituted, the first event notification message bringing about at least one restitution of a first stand-by element by the terminal, the restitution of the first stand-by element being initiated immediately upon receipt of the first event notification message by the terminal and after an execution latency which is linked only to hardware implementation constraints in the terminal; and
• a second event notification message is inserted at a second time (t2) in the data flow which conveys the content broadcast within the broadcast network, the second time substantially corresponding to a beginning of the broadcast content to be substituted, the second event notification message bringing about at least one masking of the first stand-by element by the terminal, the masking of the first stand-by element being initiated immediately upon receipt of the second event notification message by the terminal and after an execution latency which is linked only to hardware implementation constraints in the terminal.

9. Method according to claim 8, wherein the insertion step is carried out at least two other times so that:
• a third event notification message is inserted at a third time (t3) in the data flow which conveys the content broadcast within the broadcast network, the third time substantially corresponding to a beginning of a second inter-sequence which follows the broadcast content to be substituted, the third event notification message bringing about at least one restitution of a second standby element by the terminal, the restitution of the second standby element being initiated immediately upon receipt of the third event notification message by the terminal and after an execution latency which is linked only to hardware implementation constraints in the terminal; and
• a fourth event notification message is inserted at a fourth time (t4) in the data flow which conveys the content broadcast within the broadcast network, the fourth time substantially corresponding to a beginning of another broadcast content following the second inter-sequence, the fourth event notification message bringing about at least one masking of the second stand-by element by the terminal, the masking of the second stand-by element being initiated immediately upon receipt of the fourth event notification message by the terminal and after an execution latency which is linked only to hardware implementation constraints in the terminal.

10. Method according to claim 9, wherein the at least one other image which enables a decoding of the other broadcast content to be initiated, by the terminal, is inserted into the data flow,
wherein the third event notification message further initiates an action which brings about a decoding of the other broadcast content,
and wherein a time difference in the data flow between the at least one other image and the third event notification message is greater than an execution latency of the action which brings about the decoding of the other content broadcast by the terminal.

11. Method for substituting, by a terminal (110), a content which is broadcast via a broadcast network (120) to which the terminal is connected via a substitution content which is targeted at least for the terminal, **characterised in that** the terminal:
• **receives** (E420) at least one event notification message (430) inserted in a data flow which conveys the content broadcast within the broadcast network; and
• **executes** (E430) at least one action for substituting the broadcast content with the substitution content, the execution being initiated immediately upon receipt of the at least one event notification message by the terminal and being carried out after an execution latency which is linked only to hardware implementation constraints in the terminal.

12. Method according to claim 11, wherein the execution involves **obtaining** (E430a) at least one identification information item (2120b31) which is encapsulated in the at least one event notification message,
and wherein the at least one action is a function of the at least one identification information item obtained.

13. Method according to claim 11, wherein the execution involves **obtaining** (E430a) a single identification information item which can assume several values which are each associated, in the terminal, with a different set of at least one action, and wherein the at least one action is a function of the single identification information item obtained.

14. Method according to any one of claims 11 to 13, wherein the terminal further carries out another **receiving operation** (E410), via a broadband network (130) to which the terminal is connected, of:
• a first information item (2120b1) which enables an elementary flow component of the data flow to be identified,
• a second information item (2120b2) which enables an event flow to be identified in the elementary flow component, the at least one event notification message being inserted in the event flow; and
• a filtering information item (2120b32), the at least one event notification message further encapsulating the filtering information;
and wherein the receipt of the at least one event notification message is a function of the first and second information items, in order to identify an event flow in the elementary flow component, and the filtering information, in order to identify the at least one event notification message within the event flow identified.

15. Method according to any one of claims 11 to 14, wherein the terminal further carries out a **receiving operation** (E400) of the targeted content via the broadcast network or via the broadband network to which the terminal is connected.

16. Method according to any one of claims 11 to 15, wherein the execution step is implemented at least twice so that:
• a restitution of a first stand-by element is executed by the terminal, the restitution of the first stand-by element being initiated immediately upon receipt of the first event notification message by the terminal and after an execution latency which is linked only to hardware implementation constraints in the terminal, the first event notification message being inserted at a first time (t1) in the data flow which conveys the content broadcast within the broadcast network, the first time substantially corresponding to a beginning of a first inter-sequence which precedes the broadcast content to be substituted; and
• a masking of the first stand-by element is carried out by the terminal, the masking of the first stand-by element being initiated immediately upon receipt of the second event notification message by the terminal and after an execution latency which is linked only to hardware implementation constraints in the terminal, the second event notification message being inserted at a second time (t2) in the data flow which conveys the content broadcast within the broadcast network, the second time substantially corresponding to a beginning of the broadcast content to be substituted.

17. Method according to claim 16, wherein the first event notification message further initiates an action which brings about a decoding of the substitution content by a decoder of the terminal, the decoder generating a first event when the substitution content is available for restitution,
and wherein, when the first event is generated before the second event notification message is received by the terminal, the terminal executes the masking of the first standby element and restitutes the substitution content as soon as the decoder has generated the first event.

18. Method according to claim 16 or 17, wherein the execution step is implemented at least two other times, so that:
• a restitution of a second stand-by element is executed by the terminal, the restitution of the second stand-by element being initiated immediately upon receipt of a third event notification message by the terminal and after an execution latency which is linked only to hardware implementation constraints in the terminal, the third event notification message being inserted at a third time (t3) in the data flow which conveys the content broadcast within the broadcast network, the third time substantially corresponding to a beginning of a second inter-sequence which follows the broadcast content to be substituted; and
• a masking of the second stand-by element is carried out by the terminal, the masking of the second stand-by element being initiated immediately upon receipt of a fourth event notification message by the terminal and after an execution latency which is linked only to hardware implementation constraints in the terminal, the fourth event notification message being inserted at a fourth time (t4) in the data flow which conveys the content broadcast within the broadcast network, the fourth time substantially corresponding to a beginning of another broadcast content in accordance with the second inter-sequence.

19. Method according to claim 18, wherein the decoder generates a second event when the decoding of the substitution content is terminated, and wherein, when the second event is generated, before the third event notification message is received by the terminal, the terminal carries out the restitution of the second stand-by element as soon as the decoder has generated the second event.

20. Method according to any one of claims 4 to 10, when dependent on claim 4, or according to any one of claims 14 to 19, when dependent on claim 14, wherein the filtering information (2120b32) is an identifier (2120b33) of the broadcast content.

21. Method according to any one of claims 1 to 20, wherein the at least one action defined via the first encapsulated substitution information belongs to the group comprising:
• a preparation for a substitution;
• a decoding of the targeted content;
• a restitution of the targeted content in a decoded form;
• a repetition of the decoding of the broadcast content; and
• a restitution of a stand-by element.

22. Method according to any one of claims 1 to 21, wherein the execution by the terminal of the at least one action is carried out with a predetermined effective execution latency, which is different from an intrinsic latency of the terminal and which is in common with at least one other terminal for which the substitution content is also targeted.

23. Method according to any one of claims 1 to 22, wherein the terminal is a hybrid terminal which supports the HbbTV standard (Hybrid Broadcast Broadband TV).

24. Method according to any one of claims 1 to 23, wherein the data flow is in the MPEG-TS format ("Moving Picture Experts Group - Transport Stream"), and wherein at least one event notification message is a "stream event" in the DSM-CC format (Digital Storage Media Command and Control).

25. Computer program product comprising program code instructions for implementing a method according to any one of claims 1 to 23, when the program is executed on a computer.

26. Broadcast system (100) which is configured to signal, to a terminal (110), the substitution of a content broadcast via a broadcast network (120) to which the terminal is connected with a substitution content which is targeted at least for the terminal, **characterised in that** it comprises:
• means for obtaining (602) at least one substitution information packet (210, 220) comprising a time information item which is indicative of a time of execution by the terminal of at least one action for substituting the content broadcast by the substitution content;
• means for **generating** (602) at least one event notification message (230) leading to the terminal executing the at least one action, the execution being initiated immediately upon receipt of the at least one event notification message by the terminal and after an execution latency which is linked only to hardware implementation constraints in the terminal; and
• means for **inserting** (602) in a data flow which conveys the content broadcast within the broadcast network, the at least one event notification message at a time slot which is a function of the time information item.

27. Terminal (110) which is configured to substitute a content which is broadcast via a broadcast network (120) to which the terminal is connected with a substitution content which is targeted at least for the terminal, **characterised in that** it comprises:
• means for receiving (702) at least one event notification message (430) which is inserted in a data flow which conveys the content broadcast within the broadcast network; and
• means for executing (702) at least one action for substituting the content broadcast by the substitution content, the execution being initiated immediately upon receipt of the at least one event notification message by the terminal and after an execution latency which is linked only to hardware implementation constraints in the terminal.
